# EUROPEAN PATENT APPLICATION

(11) **EP 3 309 890 A1**
(43) Date of publication of application: **18.04.2018**
(21) Application number: 16807529.9
(22) Date of filing: 08.06.2016
(51) Int. Cl.: H01M 10/0567

(54) **NONAQUEOUS ELECTROLYTE SOLUTION FOR SECONDARY BATTERIES AND SECONDARY BATTERY PROVIDED WITH SAME**

(30) Priority: 09.06.2015 JP 2015116787
(71) Applicant: Stella Chemifa Corporation, Osaka 541-0047 (JP)
(72) Inventor: SAKAGUCHI, Toshitaka, Sakai-shi Osaka 590-0982 (JP); KON, Sojiro, Sakai-shi Osaka 590-0982 (JP); KATSURA, Yoshifumi, Sakai-shi Osaka 590-0982 (JP); YAMAMOTO, Masashi, Sakai-shi Osaka 590-0982 (JP); NISHIDA, Tetsuo, Sakai-shi Osaka 590-0982 (JP)
(74) Representative: Meissner Bolte Partnerschaft mbB
(86) International application number: PCT/JP2016/067110
(87) International publication number: WO 2016/199823

(57) **Abstract**

Provided are a nonaqueous electrolyte solution for a secondary battery, which causes less degradation in charge-discharge characteristic and less increase in internal resistance after storage in temperature load environments, and a secondary battery provided with same. Disclosed is a nonaqueous electrolyte solution for a secondary battery, which is used for a secondary battery, including a component (A) which is at least one phosphorus compound represented by any one of the general Formulas (1) to (4), and a component (B) which is at least one phosphoric acid diester salt represented by the general Formula (5).

## Description

### TECHNICAL FIELD

The present invention relates to a nonaqueous electrolyte solution for a secondary battery, which causes less degradation in charge-discharge characteristic and less increase in internal resistance after storage in temperature load environments, and a secondary battery provided with same.

### BACKGROUND ART

In recent years, the applied field secondary battery including a lithium secondary battery is pursued further high performance, such as improvements of a power density and energy density and a reduction of a capacity loss, in association with an increase in uses from electronic devices such as mobile phones, personal computers and digital cameras to vehicle installation. For in-vehicle usage, durability that is higher than before is desired against an ambient operating temperature which are both of high temperatures and low temperatures.

Particularly, regarding high-temperature environments, when a cell is increased in size, since the cell is constantly exposed to a relatively high temperature due to not only the usage environment but also self-generated heat, an improvement of high-temperature durability is very important. Furthermore, when the cell is stored in the high-temperature environments, an internal resistance of the cell is increased in association with deterioration of an electrode, an electrolyte solution or an electrolyte, and energy loss resulting from an internal resistance in low-temperature environments becomes remarkable.

In conventional common lithium secondary batteries, materials in which Li ions can be reversibly inserted are used for a positive electrode active material and a negative electrode active material. For examples, a compound such as LiNiO₂, LiCOO₂, LiMn₂O₄ or LiFePO₄ is used for the positive electrode active material. Lithium metal, an alloy thereof, a carbon material, a graphite material or the like is used for the negative electrode active material. Furthermore, an electrolyte solution formed by dissolving an electrolyte such as LiPF6 or LiBF₄ in a mixed solvent such as ethylene carbonate, diethyl carbonate and propylene carbonate is used for an electrolyte solution to be used for the lithium secondary battery.

Generally, there is understanding that a stable coating (solid electrolyte interface) having lithium ion conductivity but not having electronic conductivity is formed at an interface between the electrode active material and the electrolyte solution. The process of insertion in an electrode active material/desertion from an electrode active material of lithium ions is high in reversibility; however, when charge-discharge is repeated in the high-temperature environments, cracks are produced or dissolution/decomposition takes place at the stable interface and therefore charge-discharge characteristics tend to be lowered or impedance tends to increase.

Numerous attempts to improve storage characteristics of a secondary battery in environments of a temperature load are reported for such problems. For example, Patent Document 1 mentioned below proposes the addition of a difluorophosphate, and Patent Document 1 discloses that high-temperature cycle characteristics and input-output characteristics can be improved by the addition. However, only the addition of the difluorophosphate leads to a problem such as an increase in internal resistance.

Patent Document 2 mentioned below discloses that the use of a nonaqueous electrolyte solution containing, as additives, a difluorophosphate and an oxalatoborate type compound makes it possible to suppress an increase in initial negative-electrode resistance of a lithium secondary battery. However, because of high positive-electrode resistance and insufficiently suppressed negative-electrode resistance, further improvements are required.

### PRIOR ART DOCUMENTS

### PATENT DOCUMENTS

Patent Document 1: JP 2004-31079 A
Patent Document 2: JP 2014-11065 A

### SUMMARY OF THE INVENTION

### PROBLEMS TO BE SOLVED BY THE INVENTION

The present invention has been made in view of the above-mentioned problem, and it is an object of the present invention to provide a nonaqueous electrolyte solution for a secondary battery which causes less degradation in charge-discharge characteristic and less increase in internal resistance after storage in temperature load environments; and a secondary battery including the nonaqueous electrolyte solution.

### SOLUTIONS TO THE PROBLEMS

In order to solve the above-mentioned problems, the nonaqueous electrolyte solution for a secondary battery of the present invention is a nonaqueous electrolyte solution for a secondary battery, which is used for a secondary battery, comprising the following component (A) and component (B):
a component (A): at least one phosphorus compound represented by any one of the following general Formulas (1) to (4); and
a component (B): at least one phosphoric acid diester salt represented by the following general Formula (5); 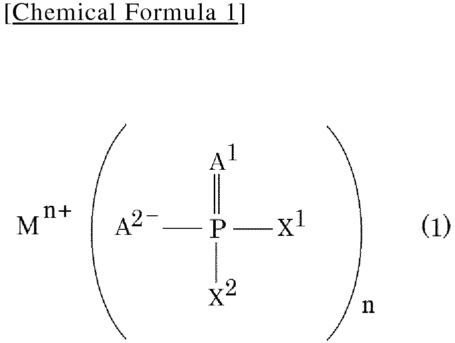
in which Mⁿ⁺ represents an alkali metal ion, an alkaline earth metal ion, an aluminum ion, a transition metal ion or an onium ion, A¹ and A² each independently represent an oxygen atom, a sulfur atom or a selenium atom, X¹ and X² each independently represent a halogen atom, an alkyl group having 1 to 20 carbon atoms, or an alkyl group having 1 to 20 carbon atoms and having at least any one of a halogen atom, a heteroatom or an unsaturated bond, or X¹ and X² represent any of the alkyl group having 1 to 20 carbon atoms, or an alkyl group having 1 to 20 carbon atoms and having at least any one of a halogen atom, a heteroatom or an unsaturated bond, and are coupled to each other to form a cyclic structure, and the n represents a valence. 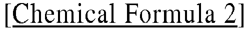 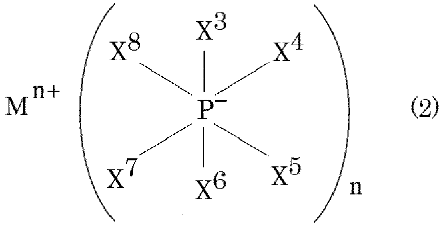 in which Mⁿ⁺ represents an alkali metal ion, an alkaline earth metal ion, an aluminum ion, a transition metal ion or an onium ion, X³ to X⁸ each independently represent a halogen atom, an alkyl group having 1 to 20 carbon atoms, an alkoxy group having 1 to 20 carbon atoms, an alkylthio group having 1 to 20 carbon atoms, an alkyl group having 1 to 20 carbon atoms and having at least any one of a halogen atom, a heteroatom or an unsaturated bond, an alkoxy group having 1 to 20 carbon atoms and having at least any one of a halogen atom, a heteroatom or an unsaturated bond, or an alkylthio group having 1 to 20 carbon atoms and having at least any one of a halogen atom, a heteroatom or an unsaturated bond, or at least one of combinations optionally selected from X³ to X⁸ forms a cyclic structure of -OOC-Y-COO-, -OOC-Y-O- or -O-Y-O- in which Y represents a hydrocarbon group having 0 to 20 carbon atoms, or a hydrocarbon group having 0 to 20 carbon atoms and having at least any one of a halogen atom, a heteroatom, an unsaturated bond or a cyclic structure, and the n represents a valence. 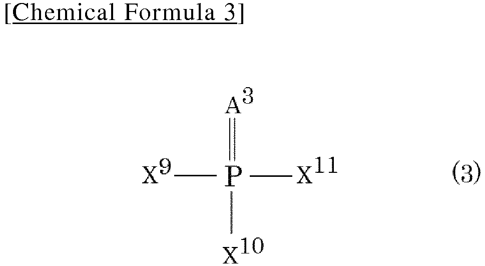 in which A³ represents an oxygen atom, a sulfur atom or a selenium atom, X⁹ to X¹¹ each independently represent a hydrogen atom, a halogen atom, an alkyl group having 1 to 20 carbon atoms, an alkoxy group having 1 to 20 carbon atoms, an alkylthio group having 1 to 20 carbon atoms, an alkyl group having 1 to 20 carbon atoms and having at least any one of a halogen atom, a heteroatom or an unsaturated bond, an alkoxy group having 1 to 20 carbon atoms and having at least any one of a halogen atom, a heteroatom or an unsaturated bond, or an alkylthio group having 1 to 20 carbon atoms and having at least any one of a halogen atom, a heteroatom or an unsaturated bond, or at least one of combinations optionally selected from X⁹ to X¹¹ represents any of an alkyl group having 1 to 20 carbon atoms, an alkoxy group having 1 to 20 carbon atoms, an alkylthio group having 1 to 20 carbon atoms, an alkyl group having 1 to 20 carbon atoms and having at least any one of a halogen atom, a heteroatom or an unsaturated bond, an alkoxy group having 1 to 20 carbon atoms and having at least any one of a halogen atom, a heteroatom or an unsaturated bond, or an alkylthio group having 1 to 20 carbon atoms and having at least any one of a halogen atom, a heteroatom or an unsaturated bond, and is coupled to each other to form a cyclic structure. 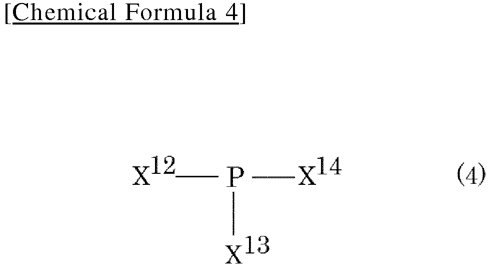 in which X¹² to X¹⁴ each independently represent a halogen atom, an alkyl group having 1 to 20 carbon atoms, an alkoxy group having 1 to 20 carbon atoms, an alkylthio group having 1 to 20 carbon atoms, an alkyl group having 1 to 20 carbon atoms and having at least any one of a halogen atom, a heteroatom or an unsaturated bond, an alkoxy group having 1 to 20 carbon atoms and having at least any one of a halogen atom, a heteroatom, or an unsaturated bond, or an alkylthio group having 1 to 20 carbon atoms and having at least any one of a halogen atom, a heteroatom or an unsaturated bond, or at least one of combinations optionally selected from X¹² to X¹⁴ represent any of an alkyl group having 1 to 20 carbon atoms, an alkoxy group having 1 to 20 carbon atoms, an alkylthio group having 1 to 20 carbon atoms, an alkyl group having 1 to 20 carbon atoms and having at least any one of a halogen atom, a heteroatom or an unsaturated bond, an alkoxy group having 1 to 20 carbon atoms and having at least any one of a halogen atom, a heteroatom or an unsaturated bond, or an alkylthio group having 1 to 20 carbon atoms and having at least any one of a halogen atom, a heteroatom or an unsaturated bond, and is coupled to each other to form a cyclic structure. 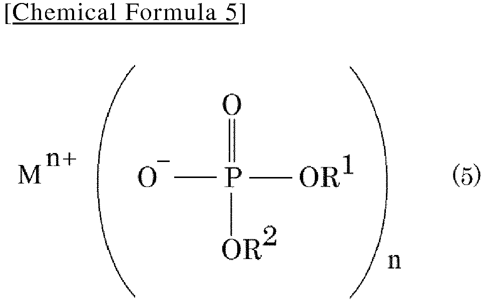 in which Mⁿ⁺ represents an alkali metal ion, an alkaline earth metal ion, an aluminum ion, a transition metal ion or an onium ion, R¹ and R² each independently represent a hydrocarbon group having 1 to 20 carbon atoms, or a hydrocarbon group having 1 to 20 carbon atoms and having at least any one of a halogen atom, a heteroatom or an unsaturated bond, or R¹ and R² represent any of the hydrocarbon group having 1 to 20 carbon atoms, or a hydrocarbon group having 1 to 20 carbon atoms and having at least any one of a halogen atom, a heteroatom or an unsaturated bond, and are coupled to each other to form a cyclic structure, and the n represents a valence.

In the configuration, it is possible to further include the following at least one component (C):
a component (C): at least one compound selected from the group consisting of a boron complex salt represented by the following general Formula (6), a boric acid ester, an acid anhydride, a cyclic carbonate having an unsaturated bond, a cyclic carbonate having a halogen atom, a cyclic sulfonate, and amines represented by the following general Formula (7) having an acetoacetyl group: 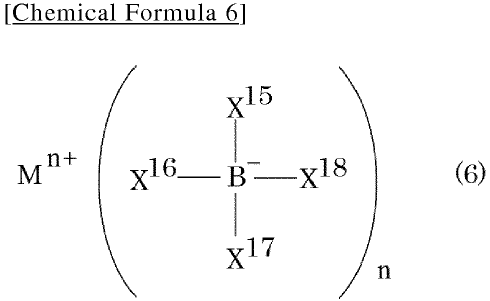
in which Mⁿ⁺ represents an alkali metal ion, an alkaline earth metal ion, an aluminum ion, a transition metal ion or an onium ion, X¹⁵ to X¹⁸ each independently represent a halogen atom, an alkyl group having 1 to 20 carbon atoms, an alkoxy group having 1 to 20 carbon atoms, an alkyl group having 1 to 20 carbon atoms and having at least any one of a halogen atom, a heteroatom or an unsaturated bond, or an alkoxy group having 1 to 20 carbon atoms and having at least any one of a halogen atom, a heteroatom or an unsaturated bond, or at least one of combinations optionally selected from X¹⁵ to X¹⁸ forms a cyclic structure of -OOC-Z-COO-, -OOC-Z-O- or -O-Z-O- in which Z represents a hydrocarbon group having 1 to 20 carbon atoms, or a hydrocarbon group having 1 to 20 carbon atoms and having at least any one of a halogen atom, a heteroatom, an unsaturated bond or a cyclic structure, and the n represents a valence, 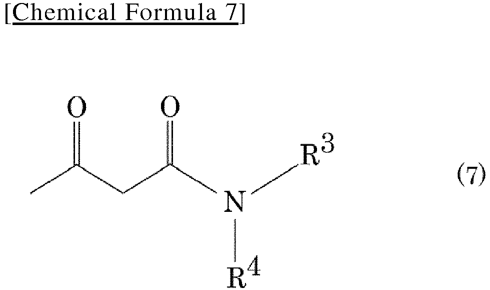 in which the R³ and R⁴ each independently represent a hydrocarbon group having 1 to 20 carbon atoms or a hydrocarbon group having 1 to 20 carbon atoms and having a halogen atom, a heteroatom or an unsaturated bond.

In the above-mentioned configuration, it is preferable that an addition amount of the component (A) is 0.05% by mass to 5% by mass of a total mass of the nonaqueous electrolyte solution for a secondary battery, an addition amount of the component (B) is 0.05% by mass to 5% by mass of a total mass of the nonaqueous electrolyte solution for a secondary battery.

In the above-mentioned configuration, it is preferable that an addition amount of the component (C) is 0.05% by mass to 5% by mass of a total mass of the nonaqueous electrolyte solution for a secondary battery.

In the above-mentioned configuration, it is preferable that the phosphorus compound represented by the general Formula (1) is lithium difluorophosphate or sodium difluorophosphate.

In the above-mentioned configuration, it is preferable that the phosphorus compound represented by the general Formula (2) is lithium difluorobisoxalatophosphate, sodium difluorobisoxalatophosphate, lithium tetrafluorooxalatophosphate, or sodium tetrafluorooxalatophosphate.

In the above-mentioned configuration, it is preferable that the phosphorus compound represented by the general Formula (3) is trimethyl phosphate, triethyl phosphate, tris(2,2,2-trifluoroethyl)phosphate or bis(2,2,2-trifluoroethyl)phosphonic acid.

In the above-mentioned configuration, it is preferable that the phosphorus compound represented by the general Formula (4) is trimethylphosphine or methyldiphenylphosphine.

In the above-mentioned configuration, it is preferable that the phosphoric acid diester salt represented by the general Formula (5) is lithium diethyl phosphate or lithium bis(2,2,2-trifluoroethyl)phosphate.

In the above-mentioned configuration, it is preferable that the boron complex salt represented by the general Formula (6) is lithium bis[1,2'-benzenediolato(2)-O,O']borate, lithium bissalicylatoborate, or lithium bis(oxalato)borate, lithium tetrafluoroborate.

In the above-mentioned configuration, it is preferable that trimethyl borate is used as the boric acid esters.

In the above-mentioned configuration, it is preferable that a maleic anhydride is used as the acid anhydrides.

In the above-mentioned configuration, it is preferable that vinylene carbonate is used as the cyclic carbonates having an unsaturated bond.

In the above-mentioned configuration, it is preferable that fluoroethylene carbonate is used as the cyclic carbonates having a halogen atom.

In the above-mentioned configuration, it is preferable that 1, 3-propane sultone is used as the cyclic sulfonic acid esters.

In the above-mentioned configuration, it is preferable that N,N-dimethylacetoacetamide is used as the amines represented by the general Formula (3) and having an acetoacetyl group.

In order to solve the above-mentioned problems, the secondary battery according to the present invention comprises at least: the nonaqueous electrolyte solution for secondary batteries; a positive electrode; and a negative electrode.

### EFFECTS OF THE INVENTION

According to the present invention, the addition of at least one phosphorus compound represented by any one of the general Formulas (1) to (4) (component (A)) and at least one phosphoric acid diester salt represented by the general Formula (5) (component (B)) to a nonaqueous electrolyte solution for a secondary battery makes it possible to suppress degradation of charge-discharge characteristics of a secondary battery provided with same and to suppress an increase in internal resistance even after storage in high temperature environments. Although a mechanism thereof is unclear, it is presumed that the addition of the components (A) and (B) leads to formation of a coating film on a surface of electrode active materials, and the coating film with thermal stability and film quality contributes to improvements.

### BRIEF DESCRIPTION OF THE DRAWINGS

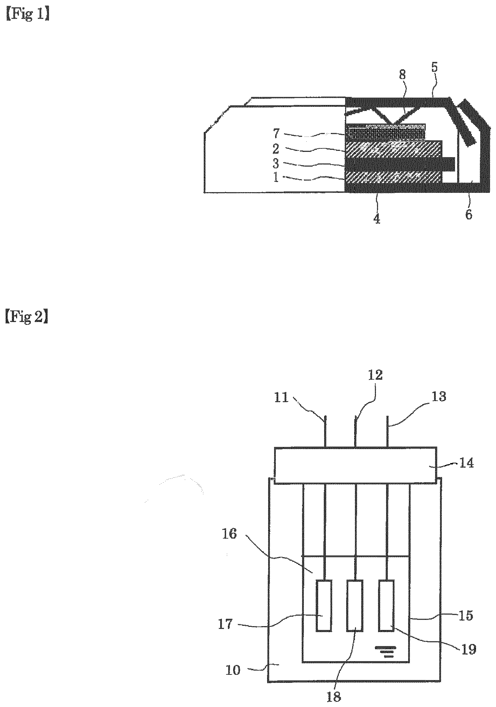

- FIG. 1: is a schematic sectional view showing an outline of a cell for evaluation of electrochemical characteristics provided with a nonaqueous electrolyte solution for a secondary battery of the present invention.

### EMBODIMENTS OF THE INVENTION

### Nonaqueous Electrolytic Solution for Secondary Battery

A nonaqueous electrolyte solution for a secondary battery (hereinafter, referred to as "nonaqueous electrolyte solution") of the present embodiment is an electrolyte solution in which an organic solvent (nonaqueous solvent) including a component (A) to be mentioned later and a component (B) added as an additive.

An irreversible reaction of decomposition of the nonaqueous electrolyte solution takes place at an interface between the electrode and the nonaqueous electrolyte solution in initial charge. It is thought that properties of a coating to be formed, for example, properties such as thermal stability, ionic conductivity, morphology and denseness, vary significantly according to an electrode active material, types of the nonaqueous solvent, the electrolyte and additives in the nonaqueous electrolyte solution and charge-discharge conditions. Also in the present embodiment, it is thought that by adding the component (A) and the component (B) to the nonaqueous electrolyte solution, a coating is formed on the surface of an electrode active material, and storage characteristics of the secondary battery in high-temperature environments (e.g., 40°C to 60°C) are improved resulting from the properties of the coating, that is, the effects of thermal stability and coating quality.

### Component (A)

At least one type of the component (A) is contained in the nonaqueous electrolyte solution, and is specifically a phosphorus compound represented by any one of the following general Formulas (1) to (4).

First, a phosphorus compound represented by the following general Formula (1) will be described.

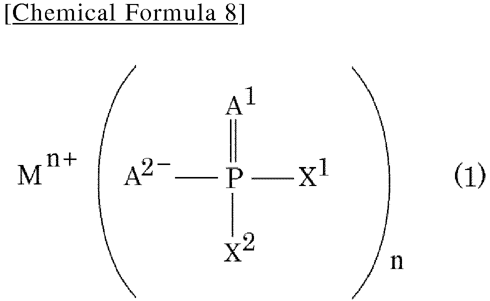

In the general Formula (1), Mⁿ⁺ represents an alkali metal ion, an alkaline earth metal ion, an aluminum ion, a transition metal ion or an onium ion.

The alkali metal ion is not particularly limited, and examples thereof include a lithium ion, a sodium ion, a potassium ion, a rubidium ion, a cesium ion and the like. These alkali metal ions may be used alone or may be used in combination of two kinds or more thereof.

Examples of the alkaline earth metal ion include a magnesium ion, a calcium ion, a strontium ion, a barium ion and the like. These alkaline earth metal ions may be used alone or may be used in combination of two kinds or more thereof.

The transition metal ion is not particularly limited, and examples thereof include a manganese ion, a cobalt ion, a nickel ion, a chromium ion, a copper ion, a molybdenum ion, a tungsten ion, a vanadium ion and the like. These transition metal ions may be used alone or may be used in combination of two kinds or more thereof.

Examples of the onium ion include an ammonium ion (NH⁴⁺), a primary ammonium ion, a secondary ammonium ion, a tertiary ammonium ion, a quaternary ammonium ion, a quaternary phosphonium ion, a sulfonium ion and the like.

The primary ammonium ion is not particularly limited, and examples thereof include a methylammonium ion, an ethylammonium ion, a propylammonium ion, an isopropylammonium ion and the like. These primary ammonium ions may be used alone or may be used in combination of two kinds or more thereof.

The secondary ammonium ion is not particularly limited, and examples thereof include a dimethylammonium ion, a diethylammonium ion, a dipropylammonium ion, a dibutylammonium ion, an ethyl(methyl)ammonium ion, a methyl propyl ammonium ion, a methyl butyl ammonium ion, a propyl butyl ammonium ion, a diisopropylammonium ion and the like. These secondary ammonium ions may be used alone or may be used in combination of two kinds or more thereof.

Tertiary ammonium to form the tertiary ammonium ion is not particularly limited, and examples thereof include a trimethylammonium ion, a triethylammonium ion, a tripropylammonium ion, a tributylammonium ion, an ethyl dimethyl ammonium ion, a diethyl(methyl)ammonium ion, a triisopropylammonium ion, a dimethyl isopropyl ammonium ion, a diethyl isopropyl ammonium ion, a dimethyl propyl ammonium ion, a butyl dimethyl ammonium ion, a 1-methylpyrrolidinium ion, a 1-ethylpyrrolidinium ion, a 1-propylpyrrolidinium ion, a 1-butylpropylpyrrolidinium ion, a 1-methylimidazolium ion, a 1-ethylimidazolium ion, a 1-propylimidazolium ion, a 1-butylimidazolium ion, a pyrazolium ion, a 1-methylpyrazolium ion, a 1-ethylpyrazolium ion, a 1-propylpyrazolium ion, a 1-butylpyrazolium ion, a pyridinium ion and the like. These tertiary ammonium ions may be used alone or may be used in combination of two kinds or more thereof.

Quaternary ammonium to form the quaternary ammonium ion is not particularly limited, and examples thereof include aliphatic quaternary ammoniums, imidazoliums, pyridiniums, pyrazoliums, pyridaziniums and the like. These quaternary ammonium ions may be used alone or may be used in combination of two kinds or more thereof.

Moreover, the aliphatic quaternary ammoniums are not particularly limited, and examples thereof include tetraethylammonium, tetrapropylammonium, tetraisopropylammonium, trimethyl ethyl ammonium, dimethyl diethyl ammonium, methyl triethyl ammonium, trimethyl propyl ammonium, trimethyl isopropyl ammonium, tetrabutylammonium, trimethyl butyl ammonium, trimethyl pentyl ammonium, trimethyl hexyl ammonium, 1-ethyl-1-methylpyrrolidinium, 1-butyl-1-methylpyrrolidinium, 1-ethyl-1-methylpiperidinium, 1-butyl-1-methylpiperidinium and the like. These aliphatic quaternary ammonium ions may be used alone or may be used in combination of two kinds or more thereof.

The imidazoliums are not particularly limited, and examples thereof include 1,3-dimethyl-imidazolium, 1-ethyl-3-methylimidazolium, 1-n-propyl-3-methylimidazolium, 1-n-butyl-3-methylimidazolium, 1-n-hexyl-3-methylimidazolium and the like. These imidazoliums may be used alone or may be used in combination of two kinds or more thereof.

The pyridiniums are not particularly limited, and examples thereof include 1-methylpyridinium, 1-ethylpyridinium, 1-n-propylpyridinium and the like. These pyridiniums may be used alone or may be used in combination of two kinds or more thereof.

The pyrazoliums are not particularly limited, and examples thereof include 1,2-dimethylpyrazolium, 1-methyl-2-ethylpyrazolium, 1-propyl-2-methylpyrazolium, 1-methyl-2-butylpyrazolium, 1-methylpyrazolium, 3-methylpyrazolium, 4-methylpyrazolium, 4-iodopyrazolium, 4-bromopyrazolium, 4-iodo-3-methylpyrazolium, 4-bromo-3-methylpyrazolium and 3-trifluoromethylpyrazolium. These pyrazoliums may be used alone or may be used in combination of two kinds or more thereof.

The pyridaziniums are not particularly limited, and examples thereof include 1-methylpyridazinium, 1-ethylpyridazinium, 1-propylpyridazinium, 1-butylpyridazinium, 3 -methylpyridazinium, 4-methylpyridazinium, 3-methoxypyridazinium, 3,6-dichloropyridazinium, 3,6-dichloro-4-methylpyridazinium, 3-chloro-6-methylpyridazinium and 3-chloro-6-methoxypyridazinium. These pyridaziniums may be used alone or may be used in combination of two kinds or more thereof.

Quaternary phosphonium to form the quaternary phosphonium ion is not particularly limited, and examples thereof include benzyltriphenylphosphonium, tetraethylphosphonium, tetraphenylphosphonium and the like. These phosphoniums may be used alone or may be used in combination of two kinds or more thereof.

The sulfonium ion is not particularly limited, and examples thereof include trimethylsulfonium, triphenylsulfonium, triethylsulfonium and the like. These sulfoniums may be used alone or may be used in combination of two kinds or more thereof.

Of the ions as described as an exemplification of Mⁿ⁺, lithium ions, sodium ions and tetraalkylammonium ions are preferred from the viewpoint of ease of availability.

A¹ and A² each independently represent an oxygen atom, a sulfur atom or a selenium atom.

In the general Formula (1), X¹ and X² each independently represent a halogen atom, an alkyl group or an alkyl group having at least any one of a halogen atom, a heteroatom and an unsaturated bond (hereinafter, referred to as a "hydrocarbon group having a halogen atom or the like"). The alkyl group and the hydrocarbon group having a halogen atom or the like have 1 to 20 carbon atoms, preferably 1 to 10 carbon atoms, and more preferably 1 to 4 carbon atoms. Also, the number of the unsaturated bonds is preferably in a range of 1 to 10, more preferably in a range of 1 to 5, and particularly preferably in a range of 1 to 3.

The halogen atom represents iodine, bromine, chlorine and fluorine.

Examples of the alkyl group or the alkyl group having a halogen atom or the like include chain alkyl groups such as a methyl group, an ethyl group, a propyl group, a butyl group, an isopropyl group, a pentyl group, a hexyl group, a heptyl group and an octyl group; cyclic alkyl groups such as a cyclopentyl group and a cyclohexyl group; halogen-containing chain alkyl groups such as a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group and a hexafluoro-2-propyl group; halogen-containing cyclic alkyl groups such as a 2-iodocyclohexyl group, a 2-bromocyclohexyl group, a 2-chlorocyclohexyl group and a 2-fluorocyclohexyl group; chain alkenyl groups such as a 2-propenyl group, an isopropenyl group, a 2-butenyl group and a 3-butenyl group; cyclic alkenyl groups such as a 2-cyclopentenyl group, a 2-cyclohexenyl group and 3-cyclohexenyl group; chain alkynyl groups such as a 2-propynyl group, a 1-butynyl group, a 2-butynyl group, a 3-butynyl group, a 1-pentynyl group, a 2-pentynyl group, a 3-pentynyl group and 4-pentynyl group; phenyl groups such as a phenyl group, a 3-methoxyphenyl group, a 4-methoxyphenyl group, a 3,5-dimethoxyphenyl group and a 4-phenoxyphenyl group; halogen-containing phenyl groups such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group and a 3,5-difluorophenyl group; and naphthyl groups such as a 1-naphthyl group, a 2-naphthyl group and a 3-amino-2-naphthyl group.

In addition, the halogen atom means an atom of fluorine, chlorine, bromine or iodine. The hetero atom means an atom of oxygen, nitrogen, sulfur or the like. A part of or all of hydrogens in the alkyl group having a halogen atom or the like may be substituted with any of these halogen atoms and/o r heteroatoms.

Furthermore, X¹ and X² are any of the alkyl group and the alkyl group having a halogen atom or the like, and may be coupled to each other to form a cyclic structure. In this case, specific examples of the above-mentioned alkyl groups or alkyl groups having a halogen atom or the like in X¹ and X² include linear alkylene groups such as a methylene group, an ethylene group, a propylene group, a butylene group, a pentylene group, a hexylene group, a heptylene group, an octylene group and a nonylene group; halogen-containing linear alkylene groups such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group and a tetrafluoroethylene group; and cyclic hydrocarbon groups, such as a cyclohexylene group, a phenylene group, a benzylene group, a naphthylene group, an anthracylene group, a naphthacylene group and a pentacylene group, and a part or all thereof substituted with halogen atoms.

X¹ and X² may be the same or may be different in a group of the functional groups described above. A group of the functional groups described above is merely an exemplification, and the functional group is not limited to these functional groups.

In addition, in the general Formula (1), the n represents a valence. For example, when M is a monovalent cation, n = 1, and n = 2 in the case of a divalent cation, and n = 3 in the case of a trivalent cation.

The compounds represented by the general Formula (1) is lithium difluorophosphate or sodium difluorophosphate from the viewpoint of ease of availability.

The phosphorus compound represented by the following general Formula (2) will be described below. Regarding the same compounds as those described in the phosphorus compounds represented by the general Formulas (1), the description will be omitted.

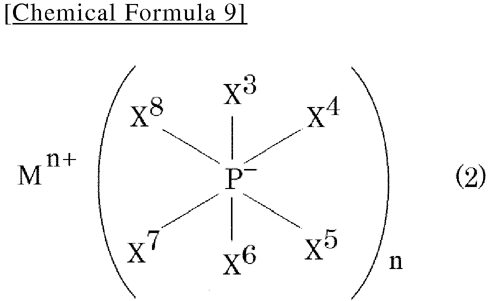

In the general Formula (2), Mⁿ⁺ and the valence n are as mentioned in the general Formula (1).

In the general Formula (2), X³ to X⁸ each independently represent a halogen atom, an alkyl group, an alkoxy group, an alkylthio group, an alkyl group having at least any one of a halogen atom, a heteroatom or an unsaturated bond (hereinafter referred to as an "alkyl group having a halogen atom or the like"), an alkoxy group having at least any one of a halogen atom, a heteroatom or an unsaturated bond (hereinafter referred to as an "alkoxy group having a halogen atom or the like"), or an alkylthio group having at least any one of a halogen atom, a heteroatom or an unsaturated bond (hereinafter referred to as an "alkylthio group having a halogen atom or the like"). The number of carbon atoms of the alkyl group, the alkoxy group, the alkylthio group, the alkyl group having a halogen atom or the like, the alkoxy group having a halogen atom or the like, and the alkylthio group having a halogen atom or the like is in a range of 1 to 20, preferably 1 to 10, and more preferably 1 to 4. The number of the unsaturated bonds is preferably in a range of 1 to 10, more preferably 1 to 5, and particularly preferably 1 to 3.

The halogen atom and the heteroatom are as mentioned in the general Formula (1). In the alkyl group having a halogen atom or the like, the alkoxy group having a halogen atom or the like, and the alkylthio group having a halogen atom or the like, regarding the halogen atom and the heteroatom, hydrogens in these functional groups may be partially or wholly substituted with any of the halogen atom and/or the heteroatom.

Specific examples of the above-mentioned X³ to X⁸ include chain alkyl groups such as a methyl group, an ethyl group, a propyl group, a butyl group, an isopropyl group, a pentyl group, a hexyl group, a heptyl group and an octyl group; cyclic alkyl groups such as a cyclopentyl group and a cyclohexyl group; halogen-containing chain alkyl groups such as an iodomethyl group, a bromomethyl group, a chloromethyl group, a fluoromethyl group, a diiodomethyl group, a dibromomethyl group, a dichloromethyl group, a difluoromethyl group, a triiodomethyl group, a tribromomethyl group, a trichloromethyl group, a trifluoromethyl group, a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group and a hexafluoro-2-propyl group; halogen-containing cyclic alkyl groups such as a 2-iodocyclohexyl group, a 2-bromocyclohexyl group, a 2-chlorocyclohexyl group and a 2-fluorocyclohexyl group; chain alkenyl groups such as a 2-propenyl group, an isopropenyl group, a 2-butenyl group and a 3-butenyl group; cyclic alkenyl groups such as a 2-cyclopentenyl group, a 2-cyclohexenyl group and 3-cyclohexenyl group; chain alkynyl groups such as a 2-propynyl group, a 1-butynyl group, a 2-butynyl group, a 3-butynyl group, a 1-pentynyl group, a 2-pentynyl group, a 3-pentynyl group and 4-pentynyl group; phenyl groups such as a phenyl group, a 3-methoxyphenyl group, a 4-methoxyphenyl group, a 3,5-dimethoxyphenyl group and a 4-phenoxyphenyl group; halogen-containing phenyl groups such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group and a 3,5-difluorophenyl group; chain alkoxy groups such as a methoxy group, an ethoxy group, a propoxy group, a butoxy group, a pentoxy group and a hexoxy group; cyclic alkoxy groups such as a cyclopentoxy group and a cyclohexoxy group; halogen-containing chain alkyl groups such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichloroethoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group and a hexafluoro-2-propoxy group; halogen-containing cyclic alkyl groups such as a 2-iodocyclohexoxy group, a 2-bromocyclohexoxy group, a 2-chlorocyclohexoxy group and a 2-fluorocyclohexoxy group; chain alkenylalkoxy groups such as a 2-propexy group, an isopropexy group, a 2-butexy group and a 3-butexy group; cyclic alkenylalkoxy groups such as a 2-cyclopentexy group, a 2-cyclohexexy group and a 3-cyclohexexy group; chain alkynylalkoxy groups such as a 2-propyxy group, a 1-butyxy group, a 2-butyxy group, a 3-butyxy group, a 1-pentyxy group, a 2-pentyxy group, a 3-pentyxy group and a 4-pentyxy group; phenoxy groups such as a phenoxy group, a 3-methylphenoxy group, a 4-methylphenoxy group and a 3,5-dimethylphenoxy group; halogen-containing phenoxy groups such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3.5-diiodophenoxy group, a 3,5-dibromophenoxy group, a 3,5-dichlorophenoxy group and a 3,5-difluorophenoxy group; and alkylthio groups such as a methylthio group, a ethylthio group, a propylthio group, a buthylthio group, a isopropylthio group, a penthlthio group and a hexylthio group.

At least one of combinations optionally selected from X³ to X⁸ may form a cyclic structure of -OOC-Y-COO-, -OOC-Y-O- or -O-Y-O-. When X³ to X⁸ form two or more cyclic structures, the cyclic structure may be the same or different from each other. Y represents a hydrocarbon group having 0 to 20 carbon atoms, or a hydrocarbon group having 0 to 20 carbon atoms and having at least any one of a halogen atom, a heteroatom, an unsaturated bond or a cyclic structure. The number of unsaturated bonds is preferably in a range of 1 to 10, more preferably 1 to 5, and particularly preferably 1 to 3.

Y is not particularly limited and specific examples thereof include linear alkylene groups such as a methylene group, an ethylene group, a propylene group, a butylene group, a pentylene group, a hexylene group, a hepthylene group, an octhylene group and a nonylene group; halogen-containing linear alkylene groups such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group and a tetrafluoroethylene group; cyclic hydrocarbon groups such as a cyclohexylene group, a phenylene group, a benzylene group, a naphthylene group, an anthracylene group, a naphthacylene group and a pentacylene group; and those which are partially or wholly substituted with halogen.

Furthermore, when Y has 0 carbon atoms, -OOC-Y-COO- is -OOC-COO-, and represents an oxalate group. When Y is a 1,2-phenylene group, -O-Y-O-represents a benzenediolate group, and -O-Y-COO- represents a salicylate group.

Examples of the phosphorus compound represented by the general Formula (2) include easily available lithium difluorobisoxalatophosphate, sodium difluorobisoxalatophosphate, lithium tetrafluorooxalatophosphate, sodium tetrafluorooxalatophosphate and the like.

The phosphorus compound represented by the following general Formula (3) will be described below. Regarding the same compounds as those described in the phosphorus compounds represented by the general Formulas (1) and (2), the description will be omitted.

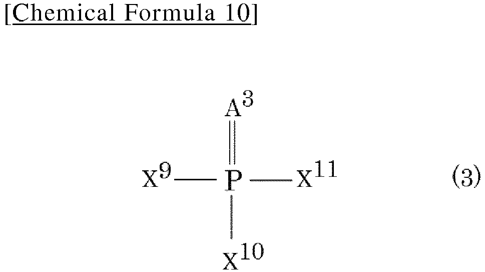

A³ represents an oxygen atom, a sulfur atom or a selenium atom.

X⁹ to X¹¹ each independently represent a hydrogen atom, a halogen atom, an alkyl group, an alkoxy group, an alkylthio group, an alkyl group having at least any one of a halogen atom, a heteroatom or an unsaturated bond (hereinafter referred to as an "alkyl group having a halogen atom or the like"), an alkoxy group having at least any one of a halogen atom, a heteroatom or an unsaturated bond (hereinafter referred to as an "alkoxy group having a halogen atom or the like"), or an alkylthio group having at least any one of a halogen atom, a heteroatom or an unsaturated bond (hereinafter referred to as an "alkylthio group having a halogen atom or the like").

The number of carbon atoms of the alkyl group, the alkoxy group, the alkylthio group, the alkyl group having a halogen atom or the like, the alkoxy group having a halogen atom or the like, and the alkylthio group having a halogen atom or the like is in a range of 1 to 20, preferably 1 to 10, and more preferably 1 to 4. The number of the unsaturated bonds is preferably in a range of 1 to 10, more preferably 1 to 5, and particularly preferably 1 to 3.

X⁹ to X¹¹ are not particularly limited, and specific examples thereof include chain alkyl groups such as a methyl group, an ethyl group, a propyl group, a butyl group, an isopropyl group, a pentyl group, a hexyl group, a heptyl group and an octyl group; cyclic alkyl groups such as a cyclopentyl group and a cyclohexyl group; halogen-containing chain alkyl groups such as an iodomethyl group, a bromomethyl group, a chloromethyl group, a fluoromethyl group, a diiodomethyl group, a dibromomethyl group, a dichloromethyl group, a difluoromethyl group, a triiodomethyl group, a tribromomethyl group, a trichloromethyl group, a trifluoromethyl group, a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group and a hexafluoro-2-propyl group; halogen-containing cyclic alkyl groups such as a 2-iodocyclohexyl group, a 2-bromocyclohexyl group, a 2-chlorocyclohexyl group and a 2-fluorocyclohexyl group; chain alkenyl groups such as a 2-propenyl group, an isopropenyl group, a 2-butenyl group and a 3-butenyl group; cyclic alkenyl groups such as a 2-cyclopentenyl group, a 2-cyclohexenyl group and 3-cyclohexenyl group; chain alkynyl groups such as a 2-propynyl group, a 1-butynyl group, a 2-butynyl group, a 3-butynyl group, a 1-pentynyl group, a 2-pentynyl group, a 3-pentynyl group and 4-pentynyl group; phenyl groups such as a phenyl group, a 3-methoxyphenyl group, a 4-methoxyphenyl group, a 3,5-dimethoxyphenyl group and a 4-phenoxyphenyl group; halogen-containing phenyl groups such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group and a 3,5-difluorophenyl group; chain alkoxy groups such as a methoxy group, an ethoxy group, a propoxy group, a butoxy group, a pentoxy group and a hexoxy group; cyclic alkoxy groups such as a cyclopentoxy group and a cyclohexoxy group; halogen-containing chain alkyl groups such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichloroethoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group and a hexafluoro-2-propoxy group; halogen-containing cyclic alkyl groups such as a 2-iodocyclohexoxy group, a 2-bromocyclohexoxy group, a 2-chlorocyclohexoxy group and a 2-fluorocyclohexoxy group; chain alkenylalkoxy groups such as a 2-propexy group, an isopropexy group, a 2-butexy group and a 3-butexy group; cyclic alkenylalkoxy groups such as a 2-cyclopentexy group, a 2-cyclohexexy group and a 3-cyclohexexy group; chain alkynylalkoxy groups such as a 2-propyxy group, a 1-butyxy group, a 2-butyxy group, a 3-butyxy group, a 1-pentyxy group, a 2-pentyxy group, a 3-pentyxy group and a 4-pentyxy group; phenoxy groups such as a phenoxy group, a 3-methoxy group, a phenoxy group, a 4-methoxy group, a phenoxy group, 3,5-dimethoxy group and phenoxy group; halogen-containing phenoxy groups such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3.5-diiodophenoxy group, a 3,5-dibromophenoxy group, a 3,5-dichlorophenoxy group and a 3,5-difluorophenoxy group; and alkylthio groups such as a methylthio group, a ethylthio group, a propylthio group, a buthylthio group, a isopropylthio group, a penthlthio group and a hexylthio group.

By at least one of combinations optionally selected from X⁹ to X¹¹, any of the alkyl group, the alkoxy group, the alkylthio group, the alkyl group having a halogen atom or the like, the alkoxy group having a halogen atom or the like, or the alkylthio group having a halogen atom or the like may be coupled to each other to form a cyclic structure. In this case, specific examples of the above-mentioned alkyl group or the like in X⁹ to X¹¹ include linear alkylene groups such as a methylene group, an ethylene group, a propylene group, a butylene group, a pentylene group, a hexylene group, a heptylene group, an octylene group and a nonylene group; halogen-containing linear alkylene groups such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group and a tetrafluoroethylene group; and cyclic hydrocarbon groups, such as a cyclohexylene group, a phenylene group, a benzylene group, a naphthylene group, an anthracylene group, a naphthacylene group and a pentacylene group, and a part or all thereof substituted with halogen atoms.

The halogen atom and the heteroatom are as mentioned in the general Formula (1). In the alkyl group having a halogen atom or the like, the alkoxy group having a halogen atom or the like, and the alkylthio group having a halogen atom or the like, regarding the halogen atom and the heteroatom, hydrogens in these functional groups may be partially or wholly substituted with any of the halogen atom and/or the heteroatom.

Specific examples of the phosphorus compound represented by the general Formula (3) include easily available trimethyl phosphate, triethyl phosphate, tris(2,2,2-trifluoroethyl)phosphate, bis(2,2,2-trifluoroethyl)phosphonic acid and the like.

The phosphorus compound represented by the following general Formula (4) will be described below. Regarding the same compounds as those described in the phosphorus compounds represented by the general Formulas (1) to (3), the description will be omitted.

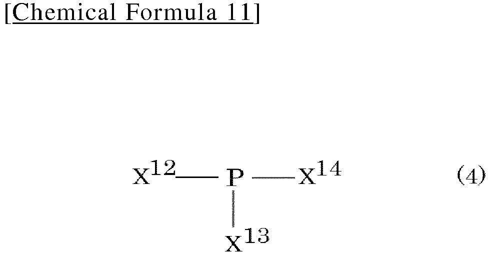

X¹² to X¹⁴ each independently represent a hydrogen atom, a halogen atom, an alkyl group, an alkoxy group, an alkylthio group, an alkyl group having at least any one of a halogen atom, a heteroatom or an unsaturated bond (hereinafter referred to as an "alkyl group having a halogen atom or the like"), an alkoxy group having at least any one of a halogen atom, a heteroatom or an unsaturated bond (hereinafter referred to as an "alkoxy group having a halogen atom or the like"), or an alkylthio group having at least any one of a halogen atom, a heteroatom or an unsaturated bond (hereinafter referred to as an "alkylthio group having a halogen atom or the like").

The number of carbon atoms of the alkyl group, the alkoxy group, the alkylthio group, the alkyl group having a halogen atom or the like, the alkoxy group having a halogen atom or the like, and the alkylthio group having a halogen atom or the like is in a range of 1 to 20, preferably 1 to 10, and more preferably 1 to 4. The number of the unsaturated bonds is preferably in a range of 1 to 10, more preferably 1 to 5, and particularly preferably 1 to 3.

X¹² to X¹⁴ are not particularly limited, and specific examples thereof include chain alkyl groups such as a methyl group, an ethyl group, a propyl group, a butyl group, an isopropyl group, a pentyl group, a hexyl group, a heptyl group and an octyl group; cyclic alkyl groups such as a cyclopentyl group and a cyclohexyl group; halogen-containing chain alkyl groups such as an iodomethyl group, a bromomethyl group, a chloromethyl group, a fluoromethyl group, a diiodomethyl group, a dibromomethyl group, a dichloromethyl group, a difluoromethyl group, a triiodomethyl group, a tribromomethyl group, a trichloromethyl group, a trifluoromethyl group, a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group and a hexafluoro-2-propyl group; halogen-containing cyclic alkyl groups such as a 2-iodocyclohexyl group, a 2-bromocyclohexyl group, a 2-chlorocyclohexyl group and a 2-fluorocyclohexyl group; chain alkenyl groups such as a 2-propenyl group, an isopropenyl group, a 2-butenyl group and a 3-butenyl group; cyclic alkenyl groups such as a 2-cyclopentenyl group, a 2-cyclohexenyl group and 3-cyclohexenyl group; chain alkynyl groups such as a 2-propynyl group, a 1-butynyl group, a 2-butynyl group, a 3-butynyl group, a 1-pentynyl group, a 2-pentynyl group, a 3-pentynyl group and 4-pentynyl group; phenyl groups such as a phenyl group, a 3-methoxyphenyl group, a 4-methoxyphenyl group, a 3,5-dimethoxyphenyl group and a 4-phenoxyphenyl group; halogen-containing phenyl groups such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group and a 3,5-difluorophenyl group; chain alkoxy groups such as a methoxy group, an ethoxy group, a propoxy group, a butoxy group, a pentoxy group and a hexoxy group; cyclic alkoxy groups such as a cyclopentoxy group and a cyclohexoxy group; halogen-containing chain alkyl groups such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichloroethoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group and a hexafluoro-2-propoxy group; halogen-containing cyclic alkyl groups such as a 2-iodocyclohexoxy group, a 2-bromocyclohexoxy group, a 2-chlorocyclohexoxy group and a 2-fluorocyclohexoxy group; chain alkenylalkoxy groups such as a 2-propexy group, an isopropexy group, a 2-butexy group and a 3-butexy group; cyclic alkenylalkoxy groups such as a 2-cyclopentexy group, a 2-cyclohexexy group and a 3-cyclohexexy group; chain alkynylalkoxy groups such as a 2-propyxy group, a 1-butyxy group, a 2-butyxy group, a 3-butyxy group, a 1-pentyxy group, a 2-pentyxy group, a 3-pentyxy group and a 4-pentyxy group; phenoxy groups such as a phenoxy group, a 3-methoxy group, a phenoxy group, a 4-methoxy group, a phenoxy group, 3,5-dimethoxy group and phenoxy group; halogen-containing phenoxy groups such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3.5-diiodophenoxy group, a 3,5-dibromophenoxy group, a 3,5-dichlorophenoxy group and a 3,5-difluorophenoxy group; and alkylthio groups such as a methylthio group, a ethylthio group, a propylthio group, a buthylthio group, a isopropylthio group, a penthlthio group and a hexylthio group.

By at least one of combinations optionally selected from X¹² to X¹⁴, any of the alkyl group, the alkoxy group, the alkylthio group, the alkyl group having a halogen atom or the like, the alkoxy group having a halogen atom or the like, or the alkylthio group having a halogen atom or the like may be coupled to each other to form a cyclic structure. In this case, specific examples of the above-mentioned alkyl group or the like in X¹² to X¹⁴ include linear alkylene groups such as a methylene group, an ethylene group, a propylene group, a butylene group, a pentylene group, a hexylene group, a heptylene group, an octylene group and a nonylene group; halogen-containing linear alkylene groups such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group and a tetrafluoroethylene group; and cyclic hydrocarbon groups, such as a cyclohexylene group, a phenylene group, a benzylene group, a naphthylene group, an anthracylene group, a naphthacylene group and a pentacylene group, and a part or all thereof substituted with halogen atoms.

Specific examples of the phosphorus compound represented by the following general Formula (4) include easily available trimethylphosphine, methyldiphenylphosphine and the like.

An addition amount of the component (A) is preferably in a range of 0.05% by mass to 5% by mass, more preferably in a range of 0.1% by mass to 3% by mass, and particularly preferably in a range of 0.5% by mass to 2% by mass of a total mass of the nonaqueous electrolyte solution. When the addition amount is 0.05% by mass or more, it is possible to further improve the cycle characteristics of a secondary battery in high-temperature environments. On the other hand, when the addition amount is 5% by mass or less, it is possible to suppress lowering of the solubility of an electrolyte of a nonaqueous electrolyte solution in a solvent of a nonaqueous electrolyte solution.

Further, in the present embodiment, with respect to the component (A), at least one phosphorus compound has to be contained in the nonaqueous electrolyte solution. However, the number of types of the component (A) to be contained is 1 to 5, more preferably 1 to 3, and particularly preferably 1 to 2. By reducing the number of types of the component (A), it is possible to reduce the complication of a process step in producing a nonaqueous electrolyte solution.

### Component (B)

At least one type of the component (B) is contained in the nonaqueous electrolyte solution, and is specifically a phosphoric acid diester salt represented by the following general Formula (5).

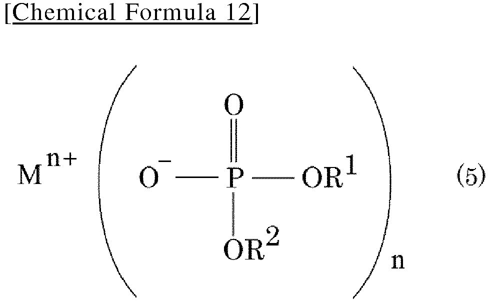

In the general Formula (5), Mⁿ⁺ and the valence n are as mentioned in the general Formula (1).

In the general Formula (5), R¹ and R² each independently represent a hydrocarbon group, or a hydrocarbon group having at least any one a halogen atom, a heteroatom or an unsaturated bond (hereinafter referred to as a "hydrocarbon group having a halogen atom or the like").

The number of carbon atoms of the hydrocarbon group is in a range of 1 to 20, preferably 1 to 10, and more preferably 1 to 4. The number of carbon atoms of the hydrocarbon group having a halogen atom or the like is in a range of 1 to 20, preferably 1 to 10, and more preferably 1 to 4. The number of the unsaturated bonds is preferably in a range of 1 to 10, more preferably 1 to 5, and particularly preferably 1 to 3.

Specific examples of hydrocarbon group or the hydrocarbon group having a halogen atom or the like include chain alkyl groups such as a methyl group, an ethyl group, a propyl group, a butyl group, an isopropyl group, a pentyl group, a hexyl group, a heptyl group and an octyl group; cyclic alkyl groups such as a cyclopentyl group and a cyclohexyl group; halogen-containing chain alkyl groups such as a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group and a hexafluoro-2-propyl group; halogen-containing cyclic alkyl groups such as a 2-iodocyclohexyl group, a 2-bromocyclohexyl group, a 2-chlorocyclohexyl group and a 2-fluorocyclohexyl group; chain alkenyl groups such as a 2-propenyl group, an isopropenyl group, a 2-butenyl group and a 3-butenyl group; cyclic alkenyl groups such as a 2-cyclopentenyl group, a 2-cyclohexenyl group and 3-cyclohexenyl group; chain alkynyl groups such as a 2-propynyl group, a 1-butynyl group, a 2-butynyl group, a 3-butynyl group, a 1-pentynyl group, a 2-pentynyl group, a 3-pentynyl group and 4-pentynyl group; phenyl groups such as a phenyl group, a 3-methoxyphenyl group, a 4-methoxyphenyl group, a 3,5-dimethoxyphenyl group and a 4-phenoxyphenyl group; halogen-containing phenyl groups such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group and a 3,5-difluorophenyl group; and naphthyl groups such as a 1-naphthyl group, a 2-naphthyl group and a 3-amino-2-naphthyl group.

In addition, the halogen atom means an atom of fluorine, chlorine, bromine or iodine. The hetero atom means an atom of oxygen, nitrogen, sulfur or the like. A part of or all of hydrogens in the hydrocarbon group having a halogen atom or the like may be substituted with any of these halogen atoms and/o r heteroatoms.

R¹ and R² may be the same or may be different in a group of the functional groups described above. A group of the functional groups described above is merely an exemplification, and the functional group is not limited to these functional groups.

Furthermore, the R¹ and R² are any of the hydrocarbon group and the hydrocarbon group having a halogen atom or the like, and may be coupled to each other to form a cyclic structure. In this case, specific examples of the above-mentioned hydrocarbon groups or hydrocarbon groups having a halogen atom or the like include linear alkylene groups such as a methylene group, an ethylene group, a propylene group, a butylene group, a pentylene group, a hexylene group, a heptylene group, an octylene group and a nonylene group; halogen-containing linear alkylene groups such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group and a tetrafluoroethylene group; and cyclic hydrocarbon groups, such as a cyclohexylene group, a phenylene group, a benzylene group, a naphthylene group, an anthracylene group, a naphthacylene group and a pentacylene group, and a part or all thereof substituted with halogen atoms.

Specific examples of the phosphorus compound represented by the general Formula (5) include easily available lithium diethyl phosphate, lithium bis(2,2,2-trifluoroethyl)phosphate and the like.

An addition amount of the component (B) is preferably in a range of 0.05% by mass to 5% by mass, more preferably in a range of 0.1% by mass to 3% by mass, and particularly preferably in a range of 0.5% by mass to 2% by mass of a total mass of the nonaqueous electrolyte solution. When the addition amount is 0.05% by mass or more, it is possible to further improve the cycle characteristics of a secondary battery in high-temperature environments. On the other hand, when the addition amount is 5% by mass or less, it is possible to suppress lowering of the solubility of an electrolyte of a nonaqueous electrolyte solution in a solvent of a nonaqueous electrolyte solution.

Further, in the present embodiment, with respect to the component (B), at least one phosphorus compound has to be contained in the nonaqueous electrolyte solution. However, the number of types of the component (B) to be contained is 1 to 5, more preferably 1 to 3, and particularly preferably 1 to 2. By reducing the number of types of the component (B) to 5 or less, it is possible to suppress the complication of a process step in producing a nonaqueous electrolyte solution.

### Component (C)

The nonaqueous electrolyte solution of the present embodiment may further include the following at least one component (C).

The component (C) is at least one compound selected from the group consisting of a boron complex salt, a boric acid ester, an acid anhydride, a cyclic carbonate having an unsaturated bond, a cyclic carbonate having a halogen atom, a cyclic sulfonate, and amines having an acetoacetyl group.

The boron complex salt is specifically a compound represented by the following general Formula (6).

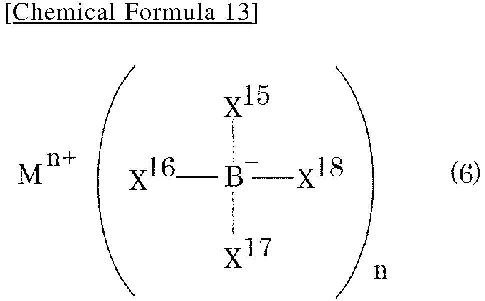

In the general Formula (6), Mⁿ⁺ and the valence n are as mentioned in the general Formula (1).

In the general Formula (6), X¹⁵ to X¹⁸ each independently represent a halogen atom, an alkyl group, an alkoxy group, an alkyl group having at least any one of a halogen atom, a heteroatom or an unsaturated bond (hereinafter referred to as an "alkyl group having a halogen atom or the like"), or an alkoxy group having at least any one of a halogen atom, a heteroatom or an unsaturated bond (hereinafter referred to as an "alkoxy group having a halogen atom or the like"). X¹⁵ to X¹⁸ are each independent and one or a combination of two optionally selected form a cyclic structure of -OOC-Z-COO-, -O-Z-O- or -OOC-Z-O-.

Z in this case represents a hydrocarbon group having 0 to 20 carbon atoms, preferably 0 to 10 carbon atoms and more preferably 0 to 5 carbon atoms, or a hydrocarbon group having 0 to 20 carbon atoms, preferably 0 to 10 carbon atoms and more preferably 0 to 5 carbon atoms and having a heteroatom, an unsaturated bond or a cyclic structure. When the X¹⁵ to X¹⁸ have two sets of any one of the cyclic structures of -OOC-Z-COO-, -O-Z-O- and -OOC-Z-O-, Zs in the two sets may be different from each other. In addition, the heteroatom means an oxygen atom, a nitrogen atom or a sulfur atom.

Specific examples of the aforementioned Z include linear alkylene groups such as a methylene group, an ethylene group, a propylene group, a butylene group, a pentylene group, a hexylene group, a heptylene group, an octylene group and a nonylene group; halogen-containing linear alkylene groups such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group and a tetrafluoroethylene group; and cyclic hydrocarbon groups, such as a cyclohexylene group, a phenylene group, a benzylene group, a naphthylene group, an anthracylene group, a naphthacylene group and a pentacylene group, and a part or all thereof substituted with halogens.

Furthermore, when Z has 0 carbon atoms, -OOC-Z-COO- is -OOC-COO-, and represents an oxalate group. When Z is a 1,2-phenylene group, -O-Z-O-represents a benzenediolate group, and -O-Z-COO- represents a salicylate group.

X¹⁵ to X¹⁸ each independently represent a halogen atom, an alkyl group, an alkoxy group, an alkyl group having at least any one of a halogen atom, a heteroatom or an unsaturated bond (hereinafter referred to as "alkyl group having a halogen atom or the like"), or an alkoxy group having at least any one of a halogen atom, a heteroatom or an unsaturated bond (hereinafter referred to as an "alkoxy group having a halogen atom or the like").

The number of carbon atoms of the alkyl group, the alkoxy group, the alkyl group having a halogen atom or the like, and the alkoxy group having a halogen atom or the like is in a range of 0 to 20, preferably 0 to 10, and more preferably 0 to 5. The number of the unsaturated bonds is preferably in a range of 1 to 10, more preferably 1 to 5, and particularly preferably 1 to 3.

The halogen atom and the heteroatom are as mentioned in the general Formula (1). In the alkyl group having a halogen atom or the like and the alkoxy group having a halogen atom or the like, regarding the halogen atom and the heteroatom, hydrogens in these functional groups may be partially or wholly substituted with any of the halogen atom and/or the heteroatom.

X¹⁵ to X¹⁸ are not particularly limited, and specific examples thereof include chain alkyl groups such as a methyl group, an ethyl group, a propyl group, a butyl group, an isopropyl group, a pentyl group, a hexyl group, a heptyl group and an octyl group; cyclic alkyl groups such as a cyclopentyl group and a cyclohexyl group; halogen-containing chain alkyl groups such as an iodomethyl group, a bromomethyl group, a chloromethyl group, a fluoromethyl group, a diiodomethyl group, a dibromomethyl group, a dichloromethyl group, a difluoromethyl group, a triiodomethyl group, a tribromomethyl group, a trichloromethyl group, a trifluoromethyl group, a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group and a hexafluoro-2-propyl group; halogen-containing cyclic alkyl groups such as a 2-iodocyclohexyl group, a 2-bromocyclohexyl group, a 2-chlorocyclohexyl group and a 2-fluorocyclohexyl group; chain alkenyl groups such as a 2-propenyl group, an isopropenyl group, a 2-butenyl group and a 3-butenyl group; cyclic alkenyl groups such as a 2-cyclopentenyl group, a 2-cyclohexenyl group and 3-cyclohexenyl group; chain alkynyl groups such as a 2-propynyl group, a 1-butynyl group, a 2-butynyl group, a 3-butynyl group, a 1-pentynyl group, a 2-pentynyl group, a 3-pentynyl group and 4-pentynyl group; phenyl groups such as a phenyl group, a 3-methoxyphenyl group, a 4-methoxyphenyl group, a 3,5-dimethoxyphenyl group and a 4-phenoxyphenyl group; halogen-containing phenyl groups such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group and a 3,5-difluorophenyl group; chain alkoxy groups such as a methoxy group, an ethoxy group, a propoxy group, a butoxy group, a pentoxy group and a hexoxy group; cyclic alkoxy groups such as a cyclopentoxy group and a cyclohexoxy group; halogen-containing chain alkyl groups such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichloroethoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group and a hexafluoro-2-propoxy group; halogen-containing cyclic alkyl groups such as a 2-iodocyclohexoxy group, a 2-bromocyclohexoxy group, a 2-chlorocyclohexoxy group and a 2-fluorocyclohexoxy group; chain alkenylalkoxy groups such as a 2-propexy group, an isopropexy group, a 2-butexy group and a 3-butexy group; cyclic alkenylalkoxy groups such as a 2-cyclopentexy group, a 2-cyclohexexy group and a 3-cyclohexexy group; chain alkynylalkoxy groups such as a 2-propyxy group, a 1-butyxy group, a 2-butyxy group, a 3-butyxy group, a 1-pentyxy group, a 2-pentyxy group, a 3-pentyxy group and a 4-pentyxy group; phenoxy groups such as a phenoxy group, a 3-methoxy group, a phenoxy group, a 4-methoxy group, a phenoxy group, 3,5-dimethoxy group and phenoxy group; and halogen-containing phenoxy groups such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3.5-diiodophenoxy group, a 3,5-dibromophenoxy group, a 3,5-dichlorophenoxy group and a 3,5-difluorophenoxy group.

Specific examples of the boron complex salt represented by the general Formula (6) include easily available lithium bis[1,2'-benzenediolato(2)-O,O']borate, lithium bissalicylatoborate, lithium bis(oxalato)borate, lithium tetrafluoroborate and the like.

The boric acid ester in the component (C) is not particularly limited in its type as long as it does not impair the characteristics of the nonaqueous electrolyte solution of the present embodiment and the secondary battery using the same, and various boric acid esters can be selected. Specific examples of the boric acid esters include trimethyl borate, triethyl borate, triisopropyl borate, tributyl borate, tripentyl borate, trihexyl borate, triheptyl borate, triphenyl borate, tris(2,2,2-iodoethyl) diborate, tris(2,2,2-tribromoethyl) borate, tris(2,2,2-trichloroethyl) borate, tris(2,2,2-trifluoroethyl) borate, tris(4-iodophenyl) borate, tris(4-bromophenyl) borate, tris(4-chlorophenyl) borate, tris(4-fluorophenyl) borate, diethyl methyl borate, ethyl dimethyl borate and the like.

The acid anhydride in the component (C) is not particularly limited in its type as long as it does not impair the characteristics of the nonaqueous electrolyte solution of the present embodiment and the secondary battery using the same, and various acid anhydrides can be selected.

Specific examples of the acid anhydrides include linear carboxylic acid anhydrides such as acetic anhydride, propionic anhydride, butylic anhydride, valeric anhydride, hexanoic anhydride, heptanoic anhydride, octanoic anhydride, nonanoic anhydride, decanoic anhydride, eicosanoic anhydride, docosanoic anhydride, benzoic anhydride, 4-methoxybenzoic anhydride, diphenylacetic anhydride, crotonic anhydride, cyclohexanecarboxylic anhydride, elaidic anhydride, isobutyric anhydride, isovaleric anhydride, lauric anhydride, linoleic anhydride, myristic anhydride, angelic anhudride, chlorodifluoroacetic anhyride, trichloroacetic anhyride, difluoroacetic anhyride, trifluoroacetic anhyride and 4-trifluoromethylbenzoic anhydride; cyclic carboxylic acid anhydrides such as phthalic anhyride, 3-acetamidophthalic anhyride, 4,4'-carbonyldiphthalic anhyride, 4,4'-biphthalic anhyride, 3-iodophthalic anhyride, 3-bromophthalic anhyride, 3-chlorophthalic anhyride, 3-fluorophthalic anhyride, 4-iodophthalic anhyride, 4-bromophthalic anhyride, 4-chlorophthalic anhyride, 4-chlorophthalic anhyride, 4,5-diiodophthalic anhyride, 4,5-dibromophthalic anhyride, 4,5-dichlorophthalic anhyride, 4,5-difluorophthalic anhyride, 4,4'-sulfonyldiphthalic anhydride, 3-nitrophthalic anhyride, 4-nitrophthalic anhyride, exo-3,6-epoxyhexahydrophthalic anhydride, exo-3,6-epoxy-1,2,3,6-tetrahydrophthalic anhydride, tetraiodophthalic anhyride, tetrachlorophthalic anhyride, tetrafluorophthalic anhyride, 4-tert-butylphthalic anhyride, 4-ethynylphthalic anhyride, 4,4'-(hexafluoroisopropylidene)diphthalic anhyride, succinic anhyride, (R)-(+)-2-acetoxysuccinic anhydride, (S)-(-)-2-acetoxysuccinic anhydride, 2-buten-1-ylsuccinic anhydride, butylsuccinic anhydride, decyl succinic anhydride, 2,3-dimethyl succinic anhydride, 2-dodecene-1-ylsuccinic anhyride, dodecylsuccinic anhydride, octadecenyl succinic anhydride, (2,7-octadien-1-yl)succinic anhydride, n-octylsuccinic anhydride, hexadecylsuccinic anhydride, maleic anhyride, 2,3-bis(2,4,5-trimethyl-3-thienyl)maleic anhyride, 2-(2-carboxyethyl)-3-methylmaleic anhydride, 2,3-dimethylmaleic anhydride, 2,3-diphenylmaleic anhydride, phenylmaleic anhydride, 4-pentene-1,2-dicarboxylic anhydride, 2,3-anthracenedicarboxylic anhydride, bicyclo[2.2.2]oct-5-ene-2,3-dicarboxylic anhydride, 4-bromo-1,8-naphthalenedicarboxylic anhydride, (+/-)-trans-1,2-cyclohexanedicarboxylic anhydride, cis-4-cyclohexene-1,2-dicarboxylic anhydride, 2,5-dibromo-3,4-thiophenedicarboxylic anhydride, 5,6-dihydro-1,4-dithiin-2,3-dicarboxylic anhydride, 2,2'-biphenyldicarboxylic anhydride, 4-methylcyclohexane-1,2-dicarboxylic anhydride, 3-methyl-4-cyclohexene-1,2-dicarboxylic anhydride, 4-methyl-4-cyclohexene-1,2-dicarboxylic anhydride, 2,3-naphthalenedicarboxylic anhydride, 3,4-thiophenedicarboxylic anhydride, 1,8-naphthalenedicarboxylic anhydride, 5-norbornene-2,3-dicarboxylic anhydride, 1,2-cyclopropane dicarboxylic anhydride, glutaric anhydride, 3,3-pentamethyleneglutaric anhydride, 2,2-dimethylglutaric anhydride, 3,3-dimethylglutaric anhydride, 3-methylglutaric anhydride, 2-phthalimidoglutaric anhydride, 3,3-tetramethyleneglutaric anhydride, N-methylisatoic anhydride, 4-iodoisatoic anhydride, 4-bromoisatoic anhydride, 4-chloroisatoic anhydride, 4-fluoroisatoic anhydride, 5-iodoisatoic anhydride, 5-bromoisatoic anhydride, 5-chloroisatoic anhydride, 5-fluoroisatoic anhydride, itaconic anhyride, caronic anhydride, citraconic anhydride, diglycolic anhydride, 1,2-naphthalic anhydride, pyromellitic dianhydride, het anhydride and 2,2,3,3,4,4-hexafluoropentanedioic anhydride; linear sulfonic acid anhydrides such as trifluoromethanesulfonic anhydride and p-toluenesulfonic anhydride; cyclic sulfonic acid anhydrides such as 2-sulfobenzoic anhydride, tetraiodo-o-sulfobenzoic anhydride, tetrabromo-o-sulfobenzoic anhydride, tetrachloro-o-sulfobenzoic anhydride and tetrafluoro-o-sulfobenzoic anhydride; chain phosphinic acid anhydrides such as diphenyl phosphinic acid; cyclic phosphonic acid anhydrides such as 1-propanephosphonic anhydride; 3,4-diiodophenylboronic anhydride, 3,4-dibromophenylboronic anhydride, 3,4-dichlorophenylboronic anhydride, 3,4-difluorophenylboronic anhydride, 4-iodophenylboronic anhydride, 4-bromophenylboronic anhydride, 4-chlorophenylboronic anhydride, 4-fluorophenylboronic anhydride, (m-terphenyl)boronic anhyride, 3,4,5-triiodophenylboronic anhyride, 3,4,5-tribromophenylboronic anhyride, 3,4,5-trichlorophenylboronic anhyride, 3,4,5-trifluorophenylboronic anhyride and the like.

The cyclic carbonate having an unsaturated bond in the component (C) is not particularly limited in its type as long as it does not impair the characteristics of the nonaqueous electrolyte solution of the present embodiment and the secondary battery using the same, and various cyclic carbonates having an unsaturated bond can be selected. The number of the unsaturated bonds is preferably 1 to 10, more preferably 1 to 5, and particularly preferably 1 to 3. Specific examples of the cyclic carbonate having an unsaturated bond include vinylene carbonate, iodovinylene carbonate, bromovinylene carbonate, chlorovinylene carbonate, fluorovinylene carbonate, 1,2-diiodovinylene carbonate, 1,2-dibromovinylene carbonate, 1,2-dichlorovinylene carbonate, 1,2-difluorovinylene carbonate, methyl vinylene carbonate, iodomethyl vinylene carbonate, bromomethyl vinylene carbonate, chloromethyl vinylene carbonate, fluoromethyl vinylene carbonate, dichloromethyl vinylene carbonate, dibromomethyl vinylene carbonate, dichloromethyl vinylene carbonate, difluoromethyl vinylene carbonate, triiodomethyl vinylene carbonate, tribromomethyl vinylene carbonate, trichloromethyl vinylene carbonate, trifluoromethyl vinylene carbonate, ethyl vinylene carbonate, propyl vinylene carbonate, butyl vinylene carbonate, dimethyl vinylene carbonate, diethyl vinylene carbonate, dipropyl vinylene carbonate, vinyl ethylene carbonate and the like.

The cyclic carbonate having a halogen atom in the component (C) is not particularly limited in its type as long as it does not impair the characteristics of the nonaqueous electrolyte solution of the present embodiment and the secondary battery using the same, and various cyclic carbonates having a halogen atom can be selected. Herein, the halogen atom means a fluorine atom, a chlorine atom, a bromine atom or an iodine atom. Specific examples of the cyclic carbonate having a halogen atom include iodoethylene carbonate, bromoethylene carbonate, chloroethylene carbonate, fluoroethylene carbonate, 1,2-diiodoethylene carbonate, 1,2-dibromoethylene carbonate, 1,2-dichloroethylene carbonate, 1,2-difluoroethylene carbonate and the like. In addition, the halogen atom means an atom of fluorine, chlorine, bromine or iodine.

The cyclic sulfonic acid ester in the component (C) is not particularly limited in its type as long as it does not impair the characteristics of the nonaqueous electrolyte solution of the present embodiment and the secondary battery using the same, and various cyclic sulfonic acid esters can be selected. Specific examples of the cyclic sulfonic acid ester include 1,3-propane sultone, 2,4-butane sultone, 1,4-butane sultone, ethylenesulfite and the like.

The amines having an acetoacetyl group in the component (C) are specifically one represented by the following general Formula (7).

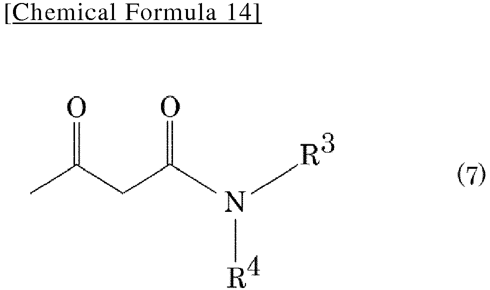

The R³ and R⁴ each independently represent any of a hydrocarbon group having 1 to 20 carbon atoms, preferably 1 to 10 carbon atoms and more preferably 1 to 5, and a hydrocarbon group having 1 to 20 carbon atoms, preferably 1 to 10 carbon atoms and more preferably 1 to 5 and having a halogen atom, a heteroatom or an unsaturated bond.

Herein, the halogen atom means a fluorine atom, a chlorine atom, a bromine atom or an iodine atom. The heteroatom means an oxygen atom, a nitrogen atom or a sulfur atom. A part of or all of hydrogens in the hydrocarbon group having a halogen atom or the like may be substituted with any of these halogen atoms and/o r heteroatoms.

Specific examples of the above-mentioned R³ and R⁴ include chain alkyl groups such as a methyl group, an ethyl group, a propyl group, a butyl group, an isopropyl group, a pentyl group, a hexyl group, a heptyl group and an octyl group; cyclic alkyl groups such as a cyclopentyl group and a cyclohexyl group; halogen-containing chain alkyl groups such as a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group and a hexafluoro-2-propyl group; halogen-containing cyclic alkyl groups such as a 2-iodocyclohexyl group, a 2-bromocyclohexyl group, a 2-chlorocyclohexyl group and a 2-fluorocyclohexyl group; chain alkenyl groups such as a 2-propenyl group, an isopropenyl group, a 2-butenyl group and a 3-butenyl group; cyclic alkenyl groups such as a 2-cyclopentenyl group, a 2-cyclohexenyl group and 3-cyclohexenyl group; chain alkynyl groups such as a 2-propynyl group, a 1-butynyl group, a 2-butynyl group, a 3-butynyl group, a 1-pentynyl group, a 2-pentynyl group, a 3-pentynyl group and 4-pentynyl group; phenyl groups such as a phenyl group, a 3-methoxyphenyl group, a 4-methoxyphenyl group, a 3,5-dimethoxyphenyl group and a 4-phenoxyphenyl group; halogen-containing phenyl groups such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group and a 3,5-difluorophenyl group; and naphthyl groups such as a 1-naphthyl group, a 2-naphthyl group and a 3-amino-2-naphthyl group.

The amines having an acetoacetyl group represented by the general Formula (7) is N,N-dimethylacetoacetamide from the viewpoint of ease of availability.

An addition amount of the component (C) is preferably in a range of 0.05% by mass to 5% by mass, more preferably in a range of 0.1% by mass to 3% by mass, and particularly preferably in a range of 0.5% by mass to 2% by mass of a total mass of the nonaqueous electrolyte solution. When the addition amount is 0.05% by mass or more, this enables the effect as an additive, that is, formation of a stable coating on the surface of an electrode. On the other hand, when the addition amount is 5% by mass or less, it is possible to suppress lowering of the solubility of an electrolyte of a nonaqueous electrolyte solution in a solvent of a nonaqueous electrolyte solution.

Further, in the present embodiment, with respect to the component (C), at least one type of the component (C) has to be contained in the nonaqueous electrolyte solution; however, the number of types of the compounds such as a boron complex salt to be contained is preferably 1 to 5, more preferably 1 to 3, and particularly preferably 1 to 2. By reducing the number of types of the component (C), it is possible to reduce the complication of a process step in producing a nonaqueous electrolyte solution.

### Electrolyte

As the electrolyte, publicly known electrolytes can be employed. For example, a lithium salt is used in the case of lithium ion battery applications, and a sodium salt is used in the case of sodium ion battery applications. Therefore, a type of the electrolyte may be appropriately selected according to the type of the secondary battery.

Further, as the electrolyte, an electrolyte containing an anion containing fluorine is preferred. Specific examples of such fluorine-containing anions include BF₄⁻, PF₆⁻, BF₃CF₃⁻, BF₃C₂F₅⁻, CF₃SO₃⁻, C₂F₅SO₃⁻, C₃F₇SO₃⁻, C₄F₉SO₃⁻, N(SO₂F)₂⁻, N(CF₃SO₂)₂⁻, N(C₂F₅SO₂)₂⁻, N(CF₃SO₂)(CF₃CO)⁻, N(CF₃SO₂)(C₂F₂SO₂)⁻, C(CF₃SO₂)₃⁻, and the like.

These fluorine-containing anions may be used alone or may be used in combination of two kinds or more thereof. Of the fluorine-containing anions, BF₄⁻, PF₆⁻ and N(CF₃SO₂)₂⁻ are preferred, and BF₄⁻ and PF₆⁻ are particularly preferred from the viewpoint of safety/stability of a nonaqueous electrolyte solution and improvement in an electric conductivity and cycle characteristics.

A concentration of the electrolyte in the organic solvent is not particularly limited, and it is usually 0.1M to 2M, preferably 0.15M to 1.8M, more preferably 0.2M to 1.5M, and particularly preferably 0.3M to 1.2M. When the concentration is 0.1M or more, it is possible to prevent the electric conductivity of the nonaqueous electrolyte solution from becoming insufficient. On the other hand, when the concentration is 2M or less, it is possible to suppress the lowering of the electric conductivity due to an increase of viscosity of the nonaqueous electrolyte solution in order to prevent deterioration of secondary battery performance.

### Organic Solvent

The organic solvent (nonaqueous solvent) to be used for the nonaqueous electrolyte solution are not particularly limited, and examples thereof include cyclic carbonic acid esters, chain carbonic acid esters, phosphoric acid esters, cyclic ethers, chain ethers, lactone compounds, chain esters, nitrile compounds, amide compounds, sulfone compounds and the like. Among these organic solvents, the carbonic acid ester is preferred in the viewpoint that it is commonly used as an organic solvent for a lithium secondary battery.

The cyclic carbonic acid esters are not particularly limited, and examples thereof include ethylene carbonate, propylene carbonate, butylene carbonate and the like. Among these carbonates, cyclic carbonates such as ethylene carbonate and propylene carbonate are preferred from the viewpoint of improving charge efficiency of a lithium secondary battery. The chain carbonic acid esters are not particularly limited, and examples thereof include dimethyl carbonate, ethyl methyl carbonate, diethyl carbonate and the like. Among these carbonates, dimethyl carbonate and ethyl methyl carbonate are preferred from the viewpoint of improving charge efficiency of a lithium secondary battery. The phosphoric acid esters are not particularly limited, and examples thereof include trimethyl phosphate, triethyl phosphate, ethyl dimethyl phosphate, diethyl methyl phosphate and the like. The cyclic ethers are not particularly limited, and examples thereof include tetrahydrofuran, 2-methyl tetrahydrofuran and the like. The chain ethers are not particularly limited, and examples thereof include dimethoxyethane and the like. The lactone compounds are not particularly limited, and examples thereof include γ-butyrolactone and the like. The chain esters are not particularly limited, and examples thereof include methyl propionate, methyl acetate, ethyl acetate, methyl formate and the like. The nitrile compounds are not particularly limited, and examples thereof include acetonitrile and the like. The amide compounds are not particularly limited, and examples thereof include dimethylformamide and the like. The sulfone compounds are not particularly limited, and examples thereof include sulfolane, methylsulfolane and the like. Further, organic solvents obtained by substituting, with fluorine, at least a part of hydrogens of hydrocarbon groups contained in molecules of the aforementioned organic solvents, can be suitably used. These organic solvents may be used alone or may be used as a mixture of two or more thereof.

As the organic solvent, a carbonic acid ester is preferably used from the viewpoint of ease of availability and performance.

### Production of Nonaqueous Electrolytic Solution

The nonaqueous electrolyte solution of the present embodiment is obtained, for example, by adding a salt of the aforementioned electrolyte to the aforementioned organic solvent (nonaqueous solvent), then adding at least one type of the component (A) represented by the general Formula (1), and further adding the component (B). When the component (C) is further contained, it is added after the addition of the component (B).

However, the order of addition is not particularly limited. In the process of these additions, it is preferred to use the organic solvent, the salt of the electrolyte, and the components (A) to (C) which are low in impurities as far as possible by previously purifying them within a scope which does not lower production efficiency. In addition, when a plurality of types of the component (A) or the component (C) are used, the order of addition of them can be appropriately set as required.

### Others

Publicly known other additives may be added to the nonaqueous electrolyte solution of the present embodiment.

### SECONDARY BATTERY

A lithium ion secondary battery will be described below as an example of the secondary battery of the present invention. FIG. 1 is a schematic sectional view showing an outline of a lithium ion secondary battery including the nonaqueous electrolyte solution.

The lithium ion secondary battery of the present embodiment has a structure in which a laminated body formed by laminating a positive electrode 1, a separator 3, a negative electrode 2, and a spacer 7 in this order from a side of a positive electrode can 4, is housed in an internal space that the positive electrode can 4 forms with a negative electrode can 5, as shown in FIG. 1. By interposing a spring 8 between the negative electrode can 5 and the spacer 7, the positive electrode 1 and the negative electrode 2 are moderately fixed to each other by pressure.

The nonaqueous electrolyte solution containing the component (A) to the component (C) of the present embodiment is impregnated between the positive electrode 1 and the separator 3, and between the separator 3 and the negative electrode 2. The positive electrode can 4 and the negative electrode can 5 are supported by sandwiching a gasket 6 between the positive electrode can 4 and the negative electrode can 5 and joined to each other to hermetically seal the laminated body.

A material of a positive electrode active material layer in the positive electrode 1 is not particularly limited, and examples thereof include transition metal compounds having a structure in which lithium ions can be diffused and oxides of the transition metal compound and lithium. Examples of the specific materials to be used include oxides such as LiCoO₂, LiNiO₂, LiMn₂O₄, Li₂MnO₃ + LiMeO₂ (Me is Mn, Co or Ni) solid solution, LiFePO₄, LiCoPO₄, LiMnPO₄, Li₂FePO₄F, LiNiₓCo_{y}Mn_{z}O₂ (0 ≤ x ≤ 1, 0 ≤ y ≤ 1, 0 ≤ z ≤ 1, x + y + z = 1), LiNiₓCoyAl_{z}O₂ (0 ≤ x ≤ 1, 0 ≤ y ≤ 1, 0 ≤ z ≤ 1, x + y + z = 1), LiFeF3, TiO2, V₂O₅ and MoO₃; sulfides such as TiS₂ and FeS; conductive polymers such as polyacetylene, polyparaphenylene, polyaniline and polypyrrole; an activated carbon; polymers generating radicals; carbon materials; and the like.

The positive electrode 1 can be obtained by molding the positive electrode active material described above by pressure molding together with a conduction aid and a binder which are publicly known, or by mixing a positive electrode active material in an organic solvent such as pyrrolidone together with a conduction aid and a binder which are publicly known to form a paste, applying the paste onto a current collector of an aluminum foil or the like, and drying the paste.

A material of a negative electrode active material layer in the negative electrode 2 is not particularly limited as long as it is a material capable of storing/releasing lithium, and examples thereof include metal composite oxides such as LiₓFe₂O₃ (0 ≤ x ≤ 1), LiₓWO₂ (0 ≤ x ≤ 1), SnₓMe¹₁₋ₓMe²_{y}O_{z} (Me¹ is Mn, Fe, Pb or Ge, Me² is Al, B, P, Si, elements in Groups 1 to 3 of a periodic table or halogens, and 0 < x ≤ 1, 1 ≤ y ≤ 3 and 1 ≤ z ≤ 8); lithium metal; lithium alloys; silicon; silicon-based alloys; tin-based alloys; metal oxides such as SnO, SnO₂, SiOₓ (0 < x < 2), PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅ and the like; ; conductive polymers such as polyacetylene; Li-Co-Ni-based materials; carbon materials such as natural graphite, artificial graphite, borated graphite, fluorinated graphite, meso-carbon microbead, graphitize pitch-based carbon fiber, carbon nanotube, hard carbon, fullerene and the like.

For the negative electrode 2, a foil-like electrode material or a powdery electrode material of the aforementioned electrode material can be used. In the case of the powdery electrode material, the negative electrode 2 can be obtained by molding the electrode material by pressure molding together with a conduction aid and a binder which are publicly known, or by mixing the electrode material in an organic solvent such as pyrrolidone together with a conduction aid and a binder which are publicly known to form a paste, applying the paste onto a current collector of a copper foil or the like, and drying the paste.

In the lithium ion secondary battery of the present embodiment, a separator 3 is interposed between the positive electrode 1 and the negative electrode 2 in order to prevent short circuit therebetween. A material or a shape of the separator 3 is not particularly limited; however, the material is preferably a material through which the aforementioned nonaqueous electrolyte solution can easily pass and which is insulating and chemically stable. Examples of such a material include microporous films or sheets made of various polymer materials. As the specific examples of the polymer material, nylon (registered trademark), nitrocellulose, polyacrylonitrile, polyvinylidene fluoride, and polyolefinic polymers, such as polyethylene and polypropylene, are used. The polyolefinic polymers are preferred from the viewpoint of electrochemical stability and chemical stability.

An optimum service voltage of the lithium ion secondary battery of the present embodiment varies among combinations of the positive electrode 1 and the negative electrode 2, and the voltage can be usually used in a range of 2.4 V to 4.6 V.

A shape of the lithium ion secondary battery of the present embodiment is not particularly limited, and examples thereof include a cylindrical shape, a prismatic shape, a laminate shape and the like in addition to a coin shape shown in FIG. 1.

According to the secondary battery of the present embodiment, it is possible to exhibit excellent cycle characteristics even in high-temperature environments, and the nonaqueous electrolyte solution of the present embodiment can be suitably used for, for example, a lithium ion secondary battery. However, the lithium ion secondary battery shown in FIG. 1 is shown as an example of an aspect of the secondary battery of the present invention, and the secondary battery of the present invention is not limited to this example.

### EXAMPLES

Suitable examples of the present invention will be described in detail below by way of examples. However, materials or mixing amounts described in these examples do not purport to limit the scope of the present invention only to these unless there is a definitive description.

### Example 1

### Preparation of Nonaqueous Electrolytic Solution

A nonaqueous electrolyte solution was prepared in a dry box of an argon atmosphere having a dew point of -70°C or lower so that a concentration of LiPF₆ was 1.0 mol/liter in a mixed solvent of ethylene carbonate (EC) and dimethyl carbonate (DMC) (A volume ratio between EC and DMC is 1 : 1, produced by KISHIDA CHEMICAL Co., Ltd., lithium battery grade).

Then, to the mixed solvent after the addition of LiPF₆, lithium difluorophosphate and lithium diethyl phosphate were mixed so as to be 0.5% by mass and 0.5% by mass, respectively, in concentration. Thereby, a nonaqueous electrolyte solution according to the present example was prepared.

### Example 2

In the present example, to the mixed solvent after the addition of LiPF6, lithium bis(oxalato)borate was further added after the addition of lithium difluorophosphate and lithium diethyl phosphate. The concentration of lithium bis(oxalato)borate added was 0.5% by mass. A nonaqueous electrolyte solution was prepared in the same manner as in Example 1 except for that.

### Example 3

In the present example, to the mixed solvent after the addition of LiPF6 in Example 1, trimethyl borate was further mixed so as to be 0.5% by mass in concentration. A nonaqueous electrolyte solution was prepared in the same manner as in Example 1 except for that.

### Example 4

In the present example, to the mixed solvent after the addition of LiPF6 in Example 1, vinylene carbonate was further mixed so as to be 0.5% by mass in concentration. A nonaqueous electrolyte solution was prepared in the same manner as in Example 1 except for that.

### Example 5

In the present example, to the mixed solvent after the addition of LiPF6 in Example 1, fluoroethylene carbonate was further mixed so as to be 0.5% by mass in concentration. A nonaqueous electrolyte solution was prepared in the same manner as in Example 1 except for that.

### Example 6

In the present example, to the mixed solvent after the addition of LiPF6 in Example 1, 1,3-propane sultone was further mixed so as to be 0.5% by mass in concentration. A nonaqueous electrolyte solution was prepared in the same manner as in Example 1 except for that.

### Example 7

In the present example, to the mixed solvent after the addition of LiPF6 in Example 1, N,N-dimethylacetamide was further mixed so as to be 0.5% by mass in concentration. A nonaqueous electrolyte solution was prepared in the same manner as in Example 1 except for that.

### Example 8

In the present example, lithium difluorobisoxalatophosphate was further mixed so as to be 0.5% by mass in concentration in place of lithium difluorophosphate in Example 2. A nonaqueous electrolyte solution was prepared in the same manner as in Example 2 except for that.

### Example 9

In the present example, trimethyl phosphate was further mixed so as to be 0.5% by mass in concentration in place of lithium difluorophosphate in Example 2. A nonaqueous electrolyte solution was prepared in the same manner as in Example 2 except for that.

### Example 10

In the present example, the addition concentration of lithium difluorophosphate in Example 2 was changed to 2.5% by mass and the addition concentration of lithium diethyl phosphate was changed to 5.0% by mass. A nonaqueous electrolyte solution was prepared in the same manner as in Example 2 except for that.

### Example 11

In the present example, the addition concentration of lithium difluorophosphate in Example 2 was changed to 0.05% by mass and the addition concentration of lithium diethyl phosphate was changed to 0.05% by mass. A nonaqueous electrolyte solution was prepared in the same manner as in Example 2 except for that.

### Example 12

In the present example, the addition concentration of lithium bis(oxalato)borate in Example 2 was changed to 0.05% by mass. A nonaqueous electrolyte solution was prepared in the same manner as in Example 2 except for that.

### Example 13

In the present example, the addition concentration of lithium bis(oxalato)borate in Example 2 was changed to 2.5% by mass. A nonaqueous electrolyte solution was prepared in the same manner as in Example 2 except for that.

### Example 14

In the present example, to the mixed solvent after the addition of LiPF6 in Example 2, maleic anhydride was further mixed so as to be 0.5% by mass in concentration. A nonaqueous electrolyte solution was prepared in the same manner as in Example 2 except for that.

### Example 15

In the present example, the addition concentration of lithium difluorophosphate in Example 2 was changed to 0.2% by mass. To the mixed solvent after the addition of LiPF6, lithium difluorobisoxalatophosphate was further mixed so as to be 0.5% by mass in concentration, and maleic anhydride was further mixed so as to be 0.5% by mass in concentration. A nonaqueous electrolyte solution was prepared in the same manner as in Example 2 except for that.

### Comparative Example 1

In the present comparative example, a nonaqueous electrolyte solution according to the present comparative example was prepared in the same manner as in Example 1 except that lithium diethyl phosphate was not added and lithium difluorophosphate was mixed so as to be 1.0% by mass in concentration.

### Comparative Example 2

In the present comparative example, a nonaqueous electrolyte solution according to the present comparative example was prepared in the same manner as in Example 1 except that lithium diethyl phosphate was not added, and lithium difluorophosphate was mixed so as to be 1.0% by mass in concentration and lithium oxalatoborate was mixed so as to be 0.5% by mass in concentration.

### Comparative Example 3

In the present comparative example, a nonaqueous electrolyte solution according to the present comparative example was prepared in the same manner as in Example 2 except that lithium diethyl phosphate of Example 2 was not mixed, and lithium difluorophosphate was mixed so as to be 1.0% by mass in concentration and maleic anhydride was mixed so as to be 0.5% by mass in concentration.

### Comparative Example 4

In the present comparative example, a nonaqueous electrolyte solution according to the present comparative example was prepared in the same manner as in Example 8 except that lithium diethyl phosphate of Example 8 was not mixed.

### Comparative Example 5

In the present comparative example, a nonaqueous electrolyte solution according to the present comparative example was prepared in the same manner as in Example 15 except that lithium diethyl phosphate, lithium bis(oxalato)borate and maleic anhydride of Example 15 were not mixed.

### Comparative Example 6

In the present comparative example, a nonaqueous electrolyte solution according to the present comparative example was prepared in the same manner as in Example 15 except that lithium diester phosphate and maleic anhydride of Example 15 were not mixed.

### Evaluation of Electrochemical Characteristics

Subsequently, electrochemical characteristics of nonaqueous electrolyte solutions of the respective examples and comparative examples were evaluated. In the evaluation, a three-electrode type cell for evaluation shown in FIG. 2 was used. A glass container 15 provided with a Teflon (registered trademark) lid 14 in the cell for evaluation shown in the same drawing was filled with each of the nonaqueous electrolyte solutions obtained in the respective examples and comparative examples. A working electrode 17 was supported by a stainless steel supporting rod for working electrode 11, a reference electrode 18 was supported by a stainless steel supporting rod 12 for reference electrode, and a counter electrode 19 was supported by a stainless steel supporting rod 13 for counter electrode.

### Evaluation of Positive-Electrode Material of Lithium Ion Battery

Each of 1 cm × 1 cm square pieces was cut off from LiNiCoMnO₂ (manufactured by Piotrek Co., Ltd.) and used as a working electrode 7. A lithium foil was used as a reference electrode 18 and a counter electrode 19.

A stainless steel supporting rod 11 for working electrode, a stainless steel supporting rod 12 for reference electrode and a stainless steel supporting rod 13 for counter electrode were fixed through a Teflon lid 14, and the Teflon lid was attached to a glass container 15 containing a nonaqueous electrolyte solution 16 and, at the same time, a working electrode 17, a reference electrode 18 and a counter electrode 19 were simultaneously immersed in the nonaqueous electrolyte solution 16.

By inserting the glass container 15 into an aluminum block 10 capable of controlling temperature, the temperature inside the glass container 15 was adjusted.

Using PGSTAT302N manufactured by Metrohm Autolab as an electrochemical measuring device, cyclic voltammetry and AC impedance measurements were carried out. The entire process from assembling of a cell for evaluation and measurements was performed in an argon glove box at a dew point of -70 °C or lower.

### Evaluation of Positive-Electrode Discharge Capacity of Lithium Ion Battery

The nonaqueous electrolyte solution was kept at 25 °C, and then the above-mentioned cyclic voltammetry measurement mentioned above was performed in each cycle from the immersion potential to 4,500 mV at a sweep rate of 0.5 mV/second. The discharge capacity of the nonaqueous electrolyte solution of Comparative Example 1 in the 5th cycle was regarded as 100, and a ratio of the discharge capacity of each of the nonaqueous electrolyte solutions of each of Examples and Comparative Examples to the value 100 is shown in Table 1.

**[Table 1]**

| | Nonaqueous electrolytic solution | | | | Ratio of the discharge capacity after 5th cycle at 25 °C |
|---|---|---|---|---|---|
| | Electrolyte | Additive | | | |
| | | Component(A) | Component(B) | Component(C) | |
| Example 1 | LiPF₆ | lithium difluorophosphate | lithium diethyl phosphate | - | 150 |
| Example 2 | LiPF₆ | lithium difluorophosphate | lithium diethyl phosphate | lithium bis(oxalato)borate | 135 |
| Comparative Example 1 | LiPF₆ | lithium difluorophosphate | - | - | 100 |
| Comparative Example 2 | LiPF₆ | lithium difluorophosphate | - | lithium bis(oxalato)borate | 67 |

### Evaluation of Positive-Electrode Internal Resistance of Lithium Ion Battery

Subsequently, the nonaqueous electrolyte solution was kept at 60 °C and then maintained at a constant potential of 4,200 mV for 5 hours. Thereafter, the internal resistance of the electrode was compared and evaluated by AC impedance measurement. The resistance of the nonaqueous electrolyte solution of Comparative Example 1 after a lapse of 5 hours at 60 °C was regarded as 100, and a ratio of the resistance of each of the nonaqueous electrolyte solutions of the respective Examples and Comparative Examples to the value 100 is shown in Table 2.

**[Table 2]**

| | Nonaqueous electrolytic solution | | | | Ratio of the resistance after 5th cycle hours at 60 °C |
|---|---|---|---|---|---|
| | Electrolyte | Additive | | | |
| | | Component(A) | Component(B) | Component(C) | |
| Example 1 | LiPF₆ | lithium difluorophosphate | lithium diethyl phosphate | - | 22 |
| Example 2 | LiPF₆ | lithium difluorophosphate | lithium diethyl phosphate | lithium bis(oxalato)borate | 38 |
| Comparative Example 1 | LiPF₆ | lithium difluorophosphate | - | - | 100 |
| Comparative Example 2 | LiPF₆ | lithium difluorophosphate | - | lithium bis(oxalato)borate | 143 |

### Evaluation of Cycle Characteristics

### Preparation of Coin Cell

A coin type lithium secondary battery as shown in FIG. 1 was prepared, and electrochemical characteristics of the nonaqueous electrolyte solution of Examples and Comparative Example were evaluated.

That is, LiNi_{1/3}Co_{1/3}Mn_{1/3}O₂ (produced by Piotrek Co., Ltd.), cut out into a piece of 9 mm in diameter, was used for the positive electrode, a polyethylene separator was used for the separator, and a natural graphite sheet (produced by Piotrek Co., Ltd.), cut out into a piece of 10 mm in diameter, was used for the negative electrode. Furthermore, the positive electrode, the separator, and the negative electrode were laminated in this order to form a laminated body, and the laminated body was impregnated with the nonaqueous electrolyte solution prepared in each of Examples and Comparative Examples and hermetically sealed to prepare a coin cell of each of Examples and Comparative Examples. Assembling of the coin cells was all performed in a glove box of an argon atmosphere having a dew point of -70°C or lower.

### Aging Charge-Discharge

The prepared coin cell was charged and discharged by 5 cycles in the conditions of end-of-charge voltage of 4.2 V and end-of-discharge voltage of 3.0 V by a constant current constant voltage method of 0.2 C (a current value at which a rated capacity is charged or discharged in 1 hour is defined as 1 C) in an isothermal bath at 25 °C.

### Evaluation of High-temperature Storage Characteristics

The coin cell which had undergone aging charge-discharge was charged at a current of 0.2 C to 4.2 V in an environment of 25 °C, and held for 18 days in an isothermal bath at 60 °C. After a lapse of 18 days, the coin cell was replaced in an isothermal bath at 25 °C, and charged and discharged by 2 cycles in the conditions of end-of-charge voltage of 4.2 V and end-of-discharge voltage of 3.0 V by a constant current constant voltage method of 0.2 C. A discharge capacity at a second cycle was compared and evaluated. In the following Tables 3 and 4, relative discharge capacities of Examples 1 to 15 and Comparative Examples 3 to 6 at the time when assuming that a discharge capacity of Comparative Example 3 is 100, are shown.

**[Table 3]**

| | Nonaqueous electrolytic solution | | | | | | Relative discharge capacity after a lapse of 18 days at 60 °C |
|---|---|---|---|---|---|---|---|
| | Electrolyte | Additive | | | | | |
| | | Component(A) | | Component(B) | Component(C) | | |
| Example 1 | LiPF₆ | lithium difluoro phosphate | - | lithium diethyl phosphate | - | - | 115 |
| Example 2 | LiPF₆ | lithium difluoro phosphate | - | lithium diethyl phosphate | lithium bis(oxalato)borate | - | 122 |
| Example 3 | LiPF₆ | lithium difluoro phosphate | - | lithium diethyl phosphate | trimethyl borate | - | 119 |
| Example 4 | LiPF₆ | lithium difluoro phosphate | - | lithium diethyl phosphate | vinylene carbonate | - | 121 |
| Example 5 | LiPF₆ | lithium difluoro phosphate | - | lithium diethyl phosphate | fluoroethylene carbonate | - | 120 |
| Example 6 | LiPF₆ | lithium difluoro phosphate | - | lithium diethyl phosphate | 1 , 3-propane sultone | - | 121 |
| Example 7 | LiPF₆ | lithium difluoro phosphate | - | lithium diethyl phosphate | N,N-dimethylacetoa cetamide | - | 119 |
| Example 8 | LiPF₆ | lithium difluorobisoxalat ophosphate | - | lithium diethyl phosphate | lithium bis(oxalato)borate | - | 121 |
| Example 9 | LiPF₆ | trimethyl phosphate | - | lithium diethyl phosphate | lithium bis(oxalato)borate | - | 119 |

**[Table 4]**

| | Nonaqueous electrolytic solution | | | | | | Relative discharge capacity after a lapse of 18 days at 60 °C |
|---|---|---|---|---|---|---|---|
| | Electrolyt e | Additive | | | | | |
| | | Component(A) | | Component(B) | Component(C) | | |
| Example 10 | LiPF₆ | lithium difluoro phosphate | - | lithium diethyl phosphate | lithium bis(oxalato)borate | - | 119 |
| Example 11 | LiPF₆ | lithium difluoro phosphate | - | lithium diethyl phosphate | lithium bis(oxalato)borate | - | 118 |
| Example 12 | LiPF₆ | lithium difluoro phosphate | - | lithium diethyl phosphate | lithium bis(oxalato)borate | - | 117 |
| Example 13 | LiPF₆ | lithium difluoro phosphate | - | lithium diethyl phosphate | lithium bis(oxalato)borate | - | 120 |
| Example 14 | LiPF₆ | lithium difluoro phosphate | - | lithium diethyl phosphate | lithium bis(oxalato)borate | maleic anhydride | 126 |
| Example 15 | LiPF₆ | lithium difluoro phosphate | lithium difluorobisoxala tophosphate | lithium diethyl phosphate | lithium bis(oxalato)borate | maleic anhydride | 125 |
| Comparative Example 3 | LiPF₆ | lithium difluoro phosphate | - | - | lithium bis(oxalato)borate | maleic anhydride | 100 |
| Comparative Example 4 | LiPF₆ | lithium difluorobisoxalat ophosphate | - | - | lithium bis(oxalato)borate | - | 95 |
| Comparative Example 5 | LiPF₆ | lithium difluoro phosphate | lithium difluorobisoxala tophosphate | - | - | - | 91 |
| Comparative Example 6 | LiPF₆ | lithium difluoro phosphate | lithium difluorobisoxala tophosphate | - | lithium bis(oxalato)borate | - | 95 |

As is apparent from Tables 3 to 4, the coin cell using each of the nonaqueous electrolyte solutions of Examples 1 to 15 has a higher capacity than the coin cell using each of the nonaqueous electrolyte solutions of Comparative Examples 3 to 6 even after a lapse of 18 days in high-temperature environments of 60 °C, and therefore it was verified that the coin cell using each of the nonaqueous electrolyte solutions of Examples 1 to 15 has excellent high-temperature storage characteristics.

### DESCRIPTION OF REFERENCE SIGNS

- 1: Positive electrode
- 2: Negative electrode
- 3: Separator
- 4: Positive electrode can
- 5: Negative electrode can
- 6: Gasket
- 7: Spacer
- 8: Spring
- 10: Aluminum block
- 11: Stainless steel supporting rod for working electrode
- 12: Stainless steel supporting rod for reference electrode
- 13: Stainless steel supporting rod for counter electrode
- 14: Teflon lid
- 15: Glass container
- 16: Nonaqueous electrolyte solution
- 17: Working electrode
- 18: Reference electrode
- 19: Counter electrode

## Claims

1. A nonaqueous electrolyte solution for a secondary battery which is used for a secondary battery,
comprising the following component (A) and component (B):
a component (A): at least one phosphorus compound represented by any one of the following general Formulas (1) to (4); and
a component (B): at least one phosphoric acid diester salt represented by the following general Formula (5); 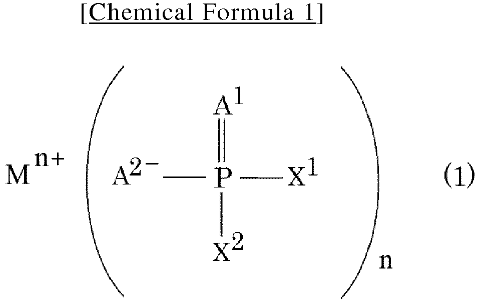 in which Mⁿ⁺ represents an alkali metal ion, an alkaline earth metal ion, an aluminum ion, a transition metal ion or an onium ion, A¹ and A² each independently represent an oxygen atom, a sulfur atom or a selenium atom, X¹ and X² each independently represent a halogen atom, an alkyl group having 1 to 20 carbon atoms, or an alkyl group having 1 to 20 carbon atoms and having at least any one of a halogen atom, a heteroatom or an unsaturated bond, or X¹ and X² represent any of the alkyl group having 1 to 20 carbon atoms, or an alkyl group having 1 to 20 carbon atoms and having at least any one of a halogen atom, a heteroatom or an unsaturated bond, and are coupled to each other to form a cyclic structure, and the n represents a valence. 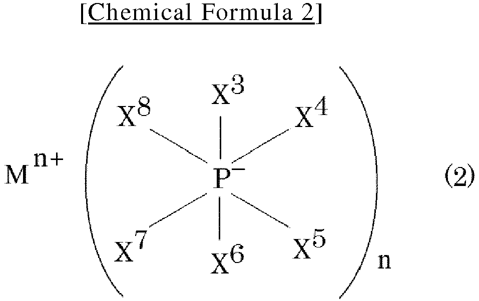 in which Mⁿ⁺ represents an alkali metal ion, an alkaline earth metal ion, an aluminum ion, a transition metal ion or an onium ion, X³ to X⁸ each independently represent a halogen atom, an alkyl group having 1 to 20 carbon atoms, an alkoxy group having 1 to 20 carbon atoms, an alkylthio group having 1 to 20 carbon atoms, an alkyl group having 1 to 20 carbon atoms and having at least any one of a halogen atom, a heteroatom or an unsaturated bond, an alkoxy group having 1 to 20 carbon atoms and having at least any one of a halogen atom, a heteroatom or an unsaturated bond, or an alkylthio group having 1 to 20 carbon atoms and having at least any one of a halogen atom, a heteroatom or an unsaturated bond, or at least one of combinations optionally selected from X³ to X⁸ forms a cyclic structure of -OOC-Y-COO-, -OOC-Y-O- or -O-Y-O- in which Y represents a hydrocarbon group having 0 to 20 carbon atoms, or a hydrocarbon group having 0 to 20 carbon atoms and having at least any one of a halogen atom, a heteroatom, an unsaturated bond or a cyclic structure, and the n represents a valence. 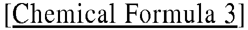 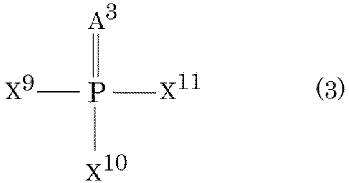 in which A³ represents an oxygen atom, a sulfur atom or a selenium atom, X⁹ to X¹¹ each independently represent a hydrogen atom, a halogen atom, an alkyl group having 1 to 20 carbon atoms, an alkoxy group having 1 to 20 carbon atoms, an alkylthio group having 1 to 20 carbon atoms, an alkyl group having 1 to 20 carbon atoms and having at least any one of a halogen atom, a heteroatom or an unsaturated bond, an alkoxy group having 1 to 20 carbon atoms and having at least any one of a halogen atom, a heteroatom or an unsaturated bond, or an alkylthio group having 1 to 20 carbon atoms and having at least any one of a halogen atom, a heteroatom or an unsaturated bond, or at least one of combinations optionally selected from X⁹ to X¹¹ represents any of an alkyl group having 1 to 20 carbon atoms, an alkoxy group having 1 to 20 carbon atoms, an alkylthio group having 1 to 20 carbon atoms, an alkyl group having 1 to 20 carbon atoms and having at least any one of a halogen atom, a heteroatom or an unsaturated bond, an alkoxy group having 1 to 20 carbon atoms and having at least any one of a halogen atom, a heteroatom or an unsaturated bond, or an alkylthio group having 1 to 20 carbon atoms and having at least any one of a halogen atom, a heteroatom or an unsaturated bond, and is coupled to each other to form a cyclic structure. 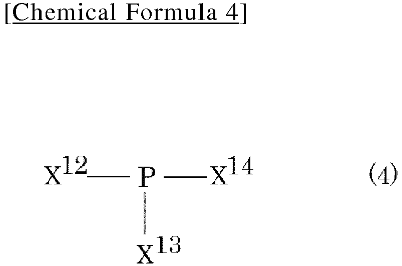 in which X¹² to X¹⁴ each independently represent a halogen atom, an alkyl group having 1 to 20 carbon atoms, an alkoxy group having 1 to 20 carbon atoms, an alkylthio group having 1 to 20 carbon atoms, an alkyl group having 1 to 20 carbon atoms and having at least any one of a halogen atom, a heteroatom or an unsaturated bond, an alkoxy group having 1 to 20 carbon atoms and having at least any one of a halogen atom, a heteroatom, or an unsaturated bond, or an alkylthio group having 1 to 20 carbon atoms and having at least any one of a halogen atom, a heteroatom or an unsaturated bond, or at least one of combinations optionally selected from X¹² to X¹⁴ represent any of an alkyl group having 1 to 20 carbon atoms, an alkoxy group having 1 to 20 carbon atoms, an alkylthio group having 1 to 20 carbon atoms, an alkyl group having 1 to 20 carbon atoms and having at least any one of a halogen atom, a heteroatom or an unsaturated bond, an alkoxy group having 1 to 20 carbon atoms and having at least any one of a halogen atom, a heteroatom or an unsaturated bond, or an alkylthio group having 1 to 20 carbon atoms and having at least any one of a halogen atom, a heteroatom or an unsaturated bond, and is coupled to each other to form a cyclic structure. 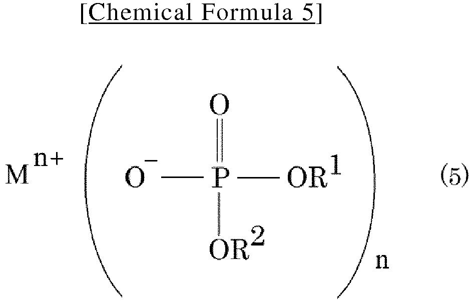 in which Mⁿ⁺ represents an alkali metal ion, an alkaline earth metal ion, an aluminum ion, a transition metal ion or an onium ion, R¹ and R² each independently represent a hydrocarbon group having 1 to 20 carbon atoms, or a hydrocarbon group having 1 to 20 carbon atoms and having at least any one of a halogen atom, a heteroatom or an unsaturated bond, or R¹ and R² represent any of the hydrocarbon group having 1 to 20 carbon atoms, or a hydrocarbon group having 1 to 20 carbon atoms and having at least any one of a halogen atom, a heteroatom or an unsaturated bond, and are coupled to each other to form a cyclic structure, and the n represents a valence.

2. The nonaqueous electrolyte solution for a secondary battery according to claim 1,
further comprising the following at least one component (C):
a component (C): at least one compound selected from the group consisting of a boron complex salt represented by the following general Formula (6), a boric acid ester, an acid anhydride, a cyclic carbonate having an unsaturated bond, a cyclic carbonate having a halogen atom, a cyclic sulfonate, and amines represented by the following general Formula (7) having an acetoacetyl group: 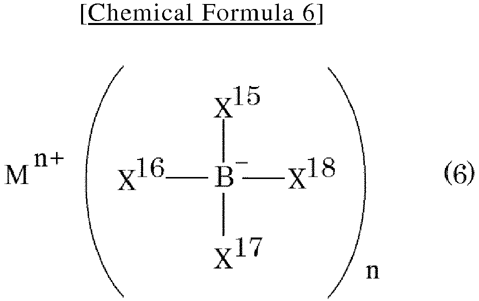 in which Mⁿ⁺ represents an alkali metal ion, an alkaline earth metal ion, an aluminum ion, a transition metal ion or an onium ion, X¹⁵ to X¹⁸ each independently represent a halogen atom, an alkyl group having 1 to 20 carbon atoms, an alkoxy group having 1 to 20 carbon atoms, an alkyl group having 1 to 20 carbon atoms and having at least any one of a halogen atom, a heteroatom or an unsaturated bond, or an alkoxy group having 1 to 20 carbon atoms and having at least any one of a halogen atom, a heteroatom or an unsaturated bond, or at least one of combinations optionally selected from X¹⁵ to X¹⁸ forms a cyclic structure of -OOC-Z-COO-, -OOC-Z-O- or -O-Z-O- in which Z represents a hydrocarbon group having 1 to 20 carbon atoms, or a hydrocarbon group having 1 to 20 carbon atoms and having at least any one of a halogen atom, a heteroatom, an unsaturated bond or a cyclic structure, and the n represents a valence, 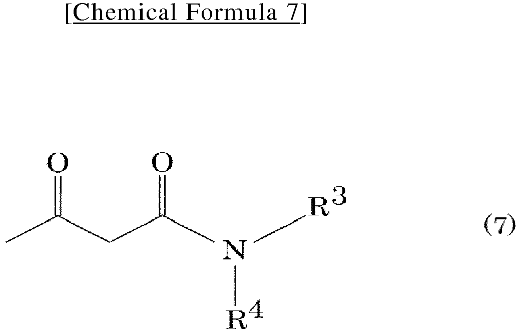 in which the R³ and R⁴ each independently represent a hydrocarbon group having 1 to 20 carbon atoms or a hydrocarbon group having 1 to 20 carbon atoms and having a halogen atom, a heteroatom or an unsaturated bond.

3. The nonaqueous electrolyte solution for a secondary battery according to claims 1 or 2,
wherein an addition amount of the component (A) is 0.05% by mass to 5% by mass of a total mass of the nonaqueous electrolyte solution for a secondary battery,
wherein an addition amount of the component (B) is 0.05% by mass to 5% by mass of a total mass of the nonaqueous electrolyte solution for a secondary battery.

4. The nonaqueous electrolyte solution for a secondary battery according to claim 2,
wherein an addition amount of the component (C) is 0.05% by mass to 5% by mass of a total mass of the nonaqueous electrolyte solution for a secondary battery.

5. The nonaqueous electrolyte solution for a secondary battery according to any one of claims 1 to 4,
wherein the phosphorus compound represented by the general Formula (1) is lithium difluorophosphate or sodium difluorophosphate.

6. The nonaqueous electrolyte solution for a secondary battery according to any one of claims 1 to 5,
wherein the phosphorus compound represented by the general Formula (2) is lithium difluorobisoxalatophosphate, sodium difluorobisoxalatophosphate, lithium tetrafluorooxalatophosphate, or sodium tetrafluorooxalatophosphate.

7. The nonaqueous electrolyte solution for a secondary battery according to any one of claims 1 to 6,
wherein the phosphorus compound represented by the general Formula (3) is trimethyl phosphate, triethyl phosphate, tris(2,2,2-trifluoroethyl)phosphate or bis(2,2,2-trifluoroethyl)phosphonic acid.

8. The nonaqueous electrolyte solution for a secondary battery according to any one of claims 1 to 7,
wherein the phosphorus compound represented by the general Formula (4) is trimethylphosphine or methyldiphenylphosphine.

9. The nonaqueous electrolyte solution for a secondary battery according to any one of claims 1 to 8,
wherein the phosphoric acid diester salt represented by the general Formula (5) is lithium diethyl phosphate or lithium bis(2,2,2-trifluoroethyl)phosphate.

10. The nonaqueous electrolyte solution for a secondary battery according to claims 2 or 4,
wherein the boron complex salt represented by the general Formula (6) is lithium bis[1,2'-benzenediolato(2)-O,O']borate, lithium bissalicylatoborate, or lithium bis(oxalato)borate, lithium tetrafluoroborate.

11. The nonaqueous electrolyte solution for a secondary battery according to any one of claims 2, 4 or 10,
wherein trimethyl borate is used as the boric acid esters.

12. The nonaqueous electrolyte solution for a secondary battery according to any one of claims 2, 4, 10 or 11,
wherein a maleic anhydride is used as the acid anhydrides.

13. The nonaqueous electrolyte solution for a secondary battery according to any one of claims 2, 4, 10 to 12,
wherein vinylene carbonate is used as the cyclic carbonates having an unsaturated bond.

14. The nonaqueous electrolyte solution for a secondary battery according to any one of claims 2, 4, 10 to 13,
wherein fluoroethylene carbonate is used as the cyclic carbonates having a halogen atom.

15. The nonaqueous electrolyte solution for a secondary battery according to any one of claims 2, 4, 10 to 14,
wherein 1, 3-propane sultone is used as the cyclic sulfonic acid esters.

16. The nonaqueous electrolyte solution for a secondary battery according to any one of claims 2, 4, 10 to 15,
wherein N,N-dimethylacetoacetamide is used as the amines represented by the general Formula (3) and having an acetoacetyl group.

17. A secondary battery
including at least the nonaqueous electrolyte solution for a secondary battery according to any one of claims 1 to 16, a positive electrode and a negative electrode.
